# EUROPEAN PATENT APPLICATION

(11) **EP 4 770 031 A1**
(43) Date of publication of application: **01.07.2026**
(21) Application number: 24856091.4
(22) Date of filing: 20.05.2024
(51) Int. Cl.: H04L 41/0896, H04L 47/24

(54) **SIGNAL TRANSFER SYSTEM, OPTICAL TRANSMISSION DEVICE, CONTROL DEVICE, AND SIGNAL TRANSFER METHOD**

(30) Priority: 24.08.2023 WO PCT/JP2023/030585
(71) Applicant: NTT, Inc., Tokyo 100-8116 (JP)
(72) Inventor: MIYAMOTO Kenji, Musashino-shi, Tokyo 180-8585 (JP); SHIMADA Tatsuya, Musashino-shi, Tokyo 180-8585 (JP); SAKAI Yoshihito, Musashino-shi, Tokyo 180-8585 (JP)
(74) Representative: Santarelli
(86) International application number: PCT/JP2024/018492
(87) International publication number: WO 2025/041396

(57) **Abstract**

A signal transfer system includes: an information acquisition unit that acquires information of priority for each traffic flow or identifier information regarding each traffic flow for each traffic flow, a control determination unit that performs optical path generation control of instructing each of one or more optical transmission devices to generate a dedicated optical path for transferring a specific traffic flow among a plurality of traffic flows included in a plurality of terminals based on the information of the priority or the identifier information acquired for each traffic flow, and a control unit that generates the dedicated optical path according to the optical path generation control.

## Description

### Technical Field

The present invention relates to a signal transfer system, an optical transmission device, a control device, and a signal transfer method.

The present application claims priority on the basis of PCT/JP2023/030585 filed in Japan on August 24, 2023, the contents of which are incorporated herein by reference.

### Background Art

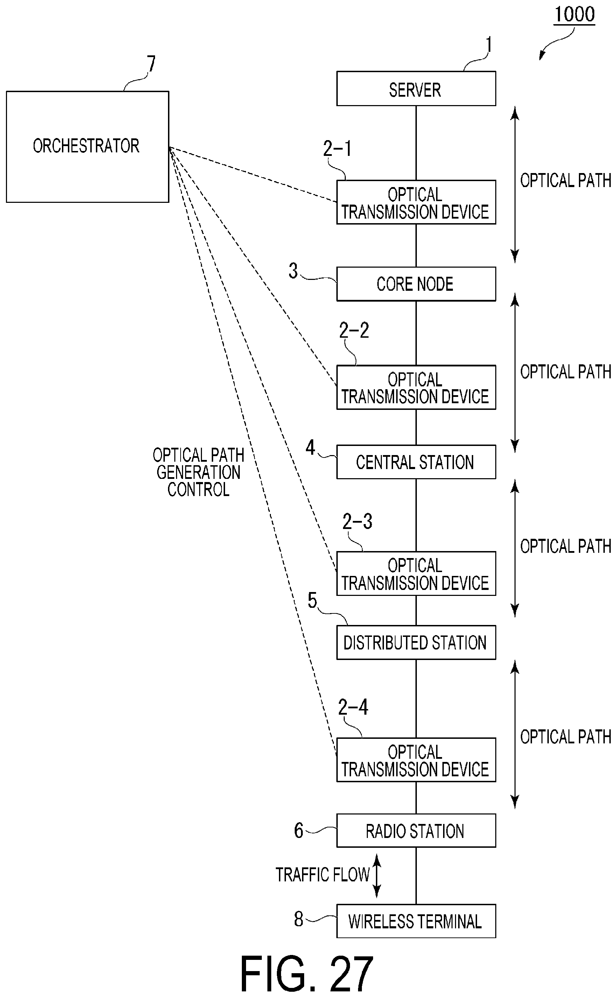

Conventionally, a signal transfer system illustrated in Fig. 27 has been proposed. Fig. 27 is a diagram illustrating a configuration example of a conventional signal transfer system 1000. The signal transfer system 1000 includes a server 1, a plurality of optical transmission devices 2-1 to 2-4, a core node 3, a central station 4, a distributed station 5, a radio station 6, and an orchestrator 7.

The server 1 communicates with one or more wireless terminals 8 connected to the radio station 6. The plurality of optical transmission devices 2-1 to 2-4 transfers signals between the devices. The optical transmission device 2-1 transfers a signal between the server 1 and the core node 3, for example. The optical transmission device 2-2 transfers a signal between the core node 3 and the central station 4, for example. The optical transmission device 2-3 transfers a signal between the central station 4 and the distributed station 5, for example. The optical transmission device 2-4 transfers a signal between the distributed station 5 and the radio station 6, for example.

The core node 3, the central station 4, and the distributed station 5 are base stations that relay signals exchanged between the server 1 and the wireless terminal 8. The radio station 6 performs wireless communication with the wireless terminal 8. The radio station 6 transmits a signal transferred from the optical transmission device 2-4 to the wireless terminal 8, and transfers a signal received from the wireless terminal 8 to the optical transmission device. The orchestrator 7 controls each device (for example, the optical transmission devices 2-1 to 2-4, the core node 3, the central station 4, the distributed station 5, and the radio station 6) provided between the server 1 and the wireless terminal 8. The orchestrator 7 performs, for example, optical path generation control that is control for causing the optical transmission devices 2-1 to 2-4 to execute generation of an optical path with respect to a traffic flow, thereby generating an optical path between the devices.

### Citation List

### Non Patent Literature

Non Patent Literature 1: Yuta Tanaka et al., "5G SA Hoshiki Wo Jitsugen Suru 5G Koa Nettowaku Gijutsu Gaiyo (in Japanese) (Overview of 5G Core Network Technology Implementing 5G SA Scheme)," NTT DOCOMO Technical Journal, vol. 30, No. 4, 2023.
Non Patent Literature 2: "3GPP TS23.502 V18.1.1", 3GPP (registered trademark), 2023.
Non Patent Literature 3: Kazuto Shimizu et al., "5G SA Hoshiki Deno Onsei Tsuwa Wo Jitsugen Suru Koa Nettowaku Gijutsu Gaiyo (in Japanese) (Overview of Core Network Technology Implementing Voice Call in 5G SA Scheme)," NTT DOCOMO Technical Journal, vol. 30, No. 4, 2023.
Non Patent Literature 4: "3GPP TS23.501 V18.1.0", 3GPP (registered trademark), 2023.

### Summary of Invention

### Technical Problem

In a wired section of a mobile communication network, when a network including only the optical transmission devices 2-1 to 2-4 is used, the network of the optical transmission devices 2-1 to 2-4 is divided into four: the server 1 to the core node 3, the core node 3 to the central station 4, the central station 4 to the distributed stations 5, and the distributed station 5 to the radio station 6, and terminated four times. Conventionally, the allocation of the optical path of these four network sections is performed independently, and a plurality of traffic flows having the same connection destination is transferred in a mixed manner in the optical path of each network section. However, in a case where a specific traffic flow needs to satisfy a strict delay requirement, there is a problem that a delay increases due to traffic congestion or the like in the same optical path due to passing through the optical path mixed with other traffic flows. Note that such a problem is a problem that similarly occurs not only in mobile communication systems but also in wireless communication systems other than the mobile communication systems.

In view of the above circumstances, an object of the present invention is to provide a technology capable of satisfying a delay requirement while reducing a delay even in a case where there is a specific traffic flow that needs to satisfy a strict delay requirement in a plurality of traffic flows of one or more wireless terminals.

### Solution to Problem

One aspect of the present invention is a signal transfer system including: a terminal accommodation station that accommodates one or more terminals; one or more optical transmission devices that transfer signals exchanged between the one or more terminals and an upper device; a core node that is provided between the one or more optical transmission devices and the upper device and determines priority for each traffic flow or identifier information regarding each traffic flow with respect to the one or more terminals; the upper device that performs communication with the one or more terminals via the one or more optical transmission devices and the core node; and a control device that controls each device, wherein the signal transfer system includes: an information acquisition unit that acquires information of priority for each traffic flow or identifier information regarding each traffic flow for each traffic flow; a control determination unit that performs optical path generation control of instructing each of the one or more optical transmission devices to generate a dedicated optical path for transferring a specific traffic flow among a plurality of traffic flows included in the one or more terminals based on the information of the priority or the identifier information acquired for each traffic flow; and a control unit that generates the dedicated optical path according to the optical path generation control.

One aspect of the present invention is an optical transmission device including: a control unit that generates a dedicated optical path for transferring a specific traffic flow among a plurality of traffic flows included in one or more terminals based on information of priority or identifier information regarding each traffic flow acquired for each traffic flow exchanged between the one or more terminals and an upper device.

One aspect of the present invention is a control device in a signal transfer system, the signal transfer system including: a terminal accommodation station that accommodates one or more terminals, one or more optical transmission devices that transfer signals exchanged between the one or more terminals and an upper device, a core node that is provided between the one or more optical transmission devices and the upper device and determines priority for each traffic flow or identifier information regarding each traffic flow with respect to the one or more terminals, the upper device that performs communication with the one or more terminals via the one or more optical transmission devices and the core node, and the control device that controls each device, wherein the control device includes: a control determination unit that performs optical path generation control of instructing each of the one or more optical transmission devices to generate a dedicated optical path for transferring a specific traffic flow among a plurality of traffic flows included in the one or more terminals based on the information of the priority or the identifier information acquired for each traffic flow.

One aspect of the present invention is a signal transfer method in a signal transfer system, the signal transfer system including: a terminal accommodation station that accommodates one or more terminals, one or more optical transmission devices that transfer signals exchanged between the one or more terminals and an upper device, a core node that is provided between the one or more optical transmission devices and the upper device and determines priority for each traffic flow or identifier information regarding each traffic flow with respect to the one or more terminals, the upper device that performs communication with the one or more terminals via the one or more optical transmission devices and the core node, and a control device that controls each device, wherein the signal transfer method includes: acquiring information of priority for each traffic flow or identifier information regarding each traffic flow for each traffic flow; performing optical path generation control of instructing each of the one or more optical transmission devices to generate a dedicated optical path for transferring a specific traffic flow among a plurality of traffic flows included in the one or more terminals based on the information of the priority or the identifier information acquired for each traffic flow; and generating the dedicated optical path according to the optical path generation control.

### Advantageous Effects of Invention

According to the present invention, it is possible to satisfy a delay requirement while reducing a delay even in a case where there is a specific traffic flow that needs to satisfy a strict delay requirement in a plurality of traffic flows of one or more wireless terminals.

### Brief Description of Drawings

[Fig. 1] A diagram illustrating a configuration example of a signal transfer system according to a first embodiment.
[Fig. 2] A flowchart illustrating an example of a flow of processing executed by the signal transfer system according to the first embodiment.
[Fig. 3] A diagram illustrating a configuration example of a signal transfer system according to a second embodiment.
[Fig. 4] A flowchart illustrating an example of a flow of processing executed by the signal transfer system according to the second embodiment.
[Fig. 5] A diagram illustrating a configuration example of a signal transfer system according to a third embodiment.
[Fig. 6] A flowchart illustrating an example of a flow of processing executed by the signal transfer system according to the third embodiment.
[Fig. 7] A diagram illustrating a configuration example of a signal transfer system according to a fourth embodiment.
[Fig. 8] A flowchart illustrating an example of a flow of processing executed by the signal transfer system according to the fourth embodiment.
[Fig. 9] A diagram illustrating a configuration example of a signal transfer system according to a fifth embodiment.
[Fig. 10] A flowchart illustrating an example of a flow of processing executed by the signal transfer system according to the fifth embodiment.
[Fig. 11] A diagram illustrating a configuration example of a signal transfer system according to a sixth embodiment.
[Fig. 12] A flowchart illustrating an example of a flow of processing executed by the signal transfer system according to the sixth embodiment.
[Fig. 13] A diagram illustrating a configuration example of a signal transfer system according to a seventh embodiment.
[Fig. 14] A flowchart illustrating an example of a flow of processing executed by the signal transfer system according to the seventh embodiment.
[Fig. 15] A diagram illustrating a configuration example of a signal transfer system according to an eighth embodiment.
[Fig. 16] A flowchart illustrating an example of a flow of processing executed by the signal transfer system according to the eighth embodiment.
[Fig. 17] A diagram illustrating a configuration example of a signal transfer system according to a ninth embodiment.
[Fig. 18] A flowchart illustrating an example of a flow of processing executed by the signal transfer system according to the ninth embodiment.
[Fig. 19] A diagram illustrating a configuration example of a signal transfer system according to a tenth embodiment.
[Fig. 20] A flowchart illustrating an example of a flow of processing executed by the signal transfer system according to the tenth embodiment.
[Fig. 21] A diagram illustrating a configuration example of a signal transfer system according to an eleventh embodiment.
[Fig. 22] A flowchart illustrating an example of a flow of processing executed by the signal transfer system according to the eleventh embodiment.
[Fig. 23] A diagram illustrating a configuration example of a signal transfer system according to a twelfth embodiment.
[Fig. 24] A flowchart illustrating an example of a flow of processing executed by the signal transfer system according to the twelfth embodiment.
[Fig. 25] A diagram illustrating a configuration example of a signal transfer system according to a thirteenth embodiment.
[Fig. 26] A flowchart illustrating an example of a flow of processing executed by the signal transfer system according to the thirteenth embodiment.
[Fig. 27] A diagram illustrating a configuration example of a conventional signal transfer system.

### Description of Embodiments

Hereinafter, embodiments of the present invention will be described with reference to the drawings.

### (First Embodiment)

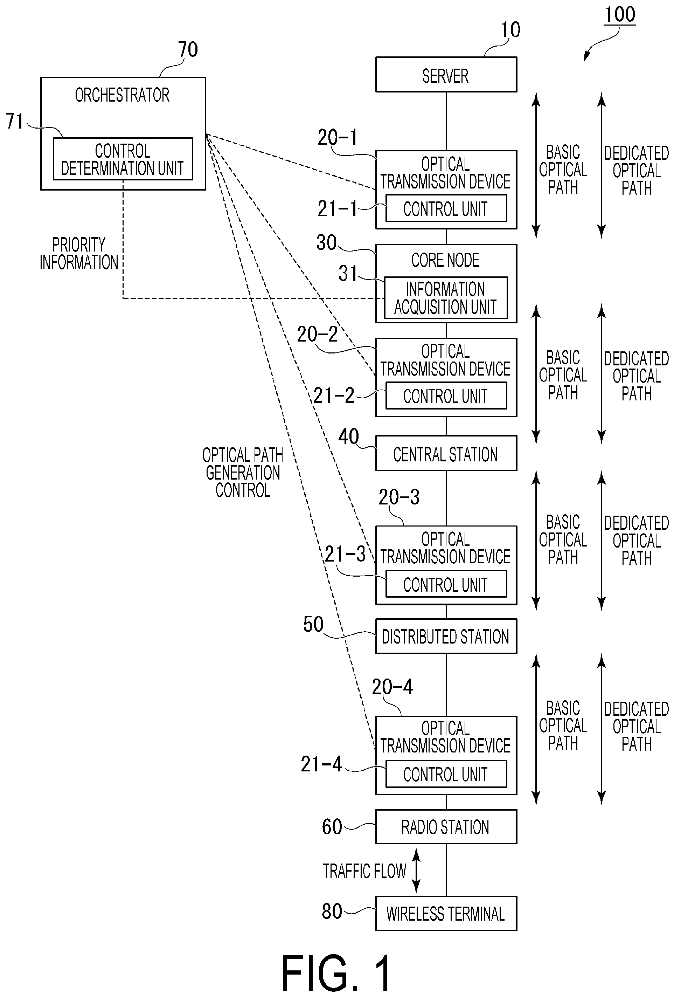

Fig. 1 is a diagram illustrating a configuration example of a signal transfer system 100 according to a first embodiment. The signal transfer system 100 is a system that transfers a signal from one communication device to another communication device. The signal transfer system 100 includes, for example, a server 10, a plurality of optical transmission devices 20-1 to 20-4, a core node 30, a central station 40, a distributed station 50, a radio station 60, and an orchestrator 70. Fig. 1 illustrates a configuration in which the signal transfer system 100 includes four optical transmission devices 20, but the number of the optical transmission devices 20 is not limited as long as the number is plural.

The server 10 and the optical transmission device 20-1, the optical transmission device 20-1 and the core node 30, the core node 30 and the optical transmission device 20-2, the optical transmission device 20-2 and the central station 40, the central station 40 and the optical transmission device 20-3, the optical transmission device 20-3 and the distributed station 50, the distributed station 50 and the optical transmission device 20-4, and the optical transmission device 20-4 and the radio station 60 are connected by an optical transmission line. The optical transmission line is a path for transmitting an optical signal, and is, for example, an optical fiber. The optical transmission line may include an optical amplifier that amplifies the optical signal. The orchestrator 70 is connected to the plurality of optical transmission devices 20-1 to 20-4 and the core node 30 by an electric line or the like.

The central station 40, the distributed station 50, and the radio station 60 are, for example, a central unit (CU), a distributed unit (DU), and a radio unit (RU) in a mobile communication system. **In** this case, a space between the server 10 and the core node 30 may be regarded as a data network (DN), a space between the core node 30 and the central station 40 may be regarded as a mobile backhaul (MBH), a space between the central station 40 and the distributed station 50 may be regarded as a mobile midhaul (MMH), and a space between the distributed station 50 and the radio station 60 may be regarded as a mobile fronthaul (MFH).

The server 10 communicates with one or more wireless terminals 80 wirelessly connected to the radio station 60. For example, the server 10 receives an uplink signal transmitted from the wireless terminal 80 and transmits a downlink signal to the wireless terminal 80. The server 10 is one aspect of an upper device.

The optical transmission devices 20-1 to 20-4 transfer signals exchanged between the server 10 and each of the one or more wireless terminals 80. The optical transmission device 20-1 transfers a signal between the server 10 and the core node 30, for example. The optical transmission device 20-2, transfers a signal between the core node 30 and the central station 40, for example. The optical transmission device 20-3 transfers a signal between the central station 40 and the distributed station 50, for example. The optical transmission device 20-4 transfers a signal between the distributed station 50 and the radio station 60, for example.

Further, the optical transmission devices 20-1 to 20-4 perform dedicated optical path generation processing in response to an instruction from the orchestrator 70. The dedicated optical path generation processing is processing of generating a dedicated optical path in a section in which the optical transmission devices 20 are provided. The dedicated optical path is an optical path having a wavelength different from a basic optical path used for normal signal transfer, and is, for example, an optical path set to transmit a specific traffic flow.

When communication is performed between the server 10 and the wireless terminal 80, the optical transmission devices 20-1 to 20-4 generate an optical path for transferring an optical signal in a section from the server 10 to the radio station 60. This optical path is the basic optical path that is used to exchange, with the server 10, all signals transmitted and received by the wireless terminal 80 connected to the radio station 60. **In** the basic optical path, a plurality of traffic flows included in the one or more wireless terminals 80 connected to the radio station 60 is mixed. In contrast, the dedicated optical path is an optical path set for transmitting a specific traffic flow among the plurality of traffic flows included in the one or more wireless terminals 80, other traffic flows are not mixed.

In the example illustrated in Fig. 1, the optical transmission device 20-1 generates a basic optical path and a dedicated optical path between the server 10 and the core node 30, the optical transmission device 20-2 generates a basic optical path and a dedicated optical path between the core node 30 and the central station 40, the optical transmission device 20-3 generates a basic optical path and a dedicated optical path between the central station 40 and the distributed station 50, and the optical transmission device 20-4 generates a basic optical path and a dedicated optical path between the distributed station 50 and the radio station 60.

The core node 30 is a base station that is provided between the optical transmission device 20-1 and the optical transmission device 20-2 and relays signals exchanged between the server 10 and the wireless terminal 80. In the first embodiment, the core node 30 determines a priority for each traffic flow between the wireless terminal 80 and the core node 30 at the start of communication of the wireless terminal 80. The interaction for determining the priority for each traffic flow is, for example, packet data unit (PDU) session establishment (see, for example, Non Patent Literatures 1 and 2) in the mobile communication system. At this time, the core node 30 extracts priority information indicating the priority for each traffic flow of the wireless terminal 80, and transmits the extracted priority information to the orchestrator 70.

The priority information is, for example, Network Slice Selection Assistance Information (NSSAI) serving as a slice ID set for each PDU Session ID, 5G QoS Indicator (5QI) set for each Quality of Service Flow Indicator (QFI), or the like (see, for example, Non Patent Literatures 3 and 4). As described above, in the first embodiment, the core node 30 acquires the priority information for each traffic flow of the wireless terminal 80.

The central station 40 is a base station that is provided between the optical transmission device 20-2 and the optical transmission device 20-3 and relays signals exchanged between the server 10 and the wireless terminal 80.

The distributed station 50 is a base station that is provided between the optical transmission device 20-3 and the optical transmission device 20-4 and relays signals exchanged between the server 10 and the wireless terminal 80.

The radio station 60 wirelessly communicates with each of the one or more wireless terminals 80. The radio station 60 transmits, for example, a signal transferred from the optical transmission device 20-4 to the wireless terminal 80, and transfers a signal received from the wireless terminal 80 to the optical transmission device 20-4.

The orchestrator 70 controls each device (for example, the optical transmission devices 20-1 to 20-4, the core node 30, the central station 40, the distributed station 50, and the radio station 60) provided between the server 10 and the wireless terminal 80. The orchestrator 70 acquires, for example, priority information for each traffic from the core node 30. The orchestrator 70 determines whether or not a dedicated optical path is necessary for a specific traffic flow of the wireless terminal 80 on the basis of the acquired priority information for each traffic flow.

When determining that a dedicated optical path is necessary, the orchestrator 70 instructs each of the optical transmission devices 20-1 to 20-4 to generate the dedicated optical path. For example, the orchestrator 70 simultaneously performs optical path generation control with respect to each of the optical transmission devices 20-1 to 20-4.

The wireless terminal 80 is a user terminal operated by a user. The wireless terminal 80 has one or more traffic flows. The wireless terminal 80 wirelessly communicates with the radio station 60. The wireless terminal 80 receives, for example, the downlink signal transmitted from the server 10 via the radio station 60. The wireless terminal 80 transmits, for example, the uplink signal that is addressed to the server 10 to the radio station 60.

Each of the optical transmission devices 20-1 to 20-4, the core node 30, the central station 40, the distributed station 50, the radio station 60, and the orchestrator 70 included in the signal transfer system 100 are configured using, for example, a processor such as a central processing unit (CPU), a memory, and a communication interface. Each device of each of the optical transmission devices 20-1 to 20-4, the core node 30, the central station 40, the distributed station 50, the radio station 60, and the orchestrator 70 functions as a communication device including a control unit when the processor executes a program.

The control unit provides each function for causing the communication device to function as each of the optical transmission devices 20-1 to 20-4, the core node 30, the central station 40, the distributed station 50, the radio station 60, or the orchestrator 70. Note that all or some of the functions of the control unit may be implemented by using hardware such as an application specific integrated circuit (ASIC), a programmable logic device (PLD), or a field programmable gate array (FPGA).

The aforementioned program may be recorded in a computer-readable recording medium. Examples of the computer-readable recording medium include a portable medium such as a flexible disk, a magneto-optical disc, ROM, a CD-ROM, and a semiconductor storage device (for example, a solid state drive (SSD)), and a storage device such as a hard disk and a semiconductor storage device built in a computer system. The aforementioned program may be transmitted via a telecommunication line.

Next, a specific configuration of each device will be described. The core node 30 includes an information acquisition unit 31. The information acquisition unit 31 acquires the priority information for each traffic flow exchanged between the wireless terminal 80 and the core node 30. Note that, in the following description, a case where the information acquisition unit 31 acquires the priority information for each traffic flow from the wireless terminal 80 toward the core node 30 will be described as an example. The information acquisition unit 31 notifies the orchestrator 70 of the acquired priority information.

The optical transmission devices 20-1 to 20-4 include control units 21-1 to 21-4. The control units 21-1 to 21-4 generate the basic optical paths in predetermined sections. Further, the control units 21-1 to 21-4 generate the dedicated optical paths in predetermined sections according to the optical path generation control of the orchestrator 70. The control unit 21-1 included in the optical transmission device 20-1 generates, for example, the dedicated optical path in a section between the server 10 and the core node 30. The control unit 21-2 included in the optical transmission device 20-2 generates, for example, the dedicated optical path in a section between the core node 30 and the central station 40. The control unit 21-3 included in the optical transmission device 20-3 generates, for example, the dedicated optical path in a section between the central station 40 and the distributed station 50. The control unit 21-4 included in the optical transmission device 20-4 generates, for example, the dedicated optical path in a section between the distributed station 50 and the radio station 60.

Further, when the optical signal is input after the generation of the dedicated optical path, the control units 21-1 to 21-4 determine to which of the basic optical path or the dedicated optical path the input optical signal is output according to an optical path identifier notification of which is provided from the orchestrator 70. In a case where the input optical signal matches the optical path identifier, the control units 21-1 to 21-4 output the input optical signal to the dedicated optical path. In a case where the input optical signal does not match the optical path identifier, the control units 21-1 to 21-4 output the input optical signal to the basic optical path.

Note that, in a case where a network is not configured by the optical transmission devices 20-1 to 20-4 in some of the sections and a low delay is guaranteed by another means, for example, priority control in conventional packet transmission or the like, the optical transmission devices 20-1 to 20-4 may not generate the dedicated optical paths in the sections but may generate the dedicated optical paths only in the other sections. The dedicated optical path may be deleted when the session of the traffic flow disappears, or may be left even when the session disappears, and may be used again when another traffic flow requires the dedicated optical path.

The orchestrator 70 includes a control determination unit 71. The control determination unit 71 determines whether or not a dedicated optical path is necessary for a specific traffic flow of the wireless terminal 80 on the basis of the priority information received from the core node 30. Specifically, in a case where a predetermined determination criterion is satisfied on the basis of the priority information, the control determination unit 71 determines that the dedicated optical path is necessary for the traffic flow from which the priority information is acquired. In a case where a predetermined determination criterion is not satisfied on the basis of the priority information, the control determination unit 71 determines that the dedicated optical path is not necessary for the traffic flow from which the priority information is acquired.

The predetermined determination criterion is, for example, that the ID of the priority such as the slice ID or the 5QI is a specific numerical value, or that the orchestrator 70 is notified of a request for generating the dedicated optical path as the priority information from the device (for example, the core node 30) from which the priority information is acquired. In a case where the predetermined determination criterion is satisfied, the control determination unit 71 performs the optical path generation control of the dedicated optical path with respect to the optical transmission devices 20-1 to 20-4. The optical path generation control of the dedicated optical path is control for causing the optical transmission devices 20-1 to 20-4 to execute generation of the optical path for a specific traffic flow. Hereinafter, the optical path generation control of the dedicated optical path is also simply referred to as optical path generation control.

When performing the optical path generation control, the control determination unit 71 notifies the optical transmission devices 20-1 to 20-4 of an optical path identifier of the dedicated optical path. Note that the control determination unit 71 notifies the optical transmission devices 20-1 to 20-4 of the optical path identifier of the dedicated optical path and also with respect to the device (for example, the server 10, the core node 30, the central station 40, the distributed station 50, and the radio station 60) connected to the optical transmission devices 20. The optical path identifier is, for example, a destination IP address, a VLAN ID, a QFI, a PDU Session ID, or the like. Note that there may be a plurality of paths for generating the dedicated optical path.

The device (for example, the server 10, the core node 30, the central station 40, the distributed station 50, and the radio station 60) connected to the optical transmission devices 20 determines to which of the basic optical path or the dedicated optical path the input optical signal is output according to an optical path identifier notification of which is provided from the orchestrator 70.

In the signal transfer system 100 according to the first embodiment, the control determination unit 71 is included in the control unit of the orchestrator 70, and the information acquisition unit 31 is included in the control unit of the core node 30.

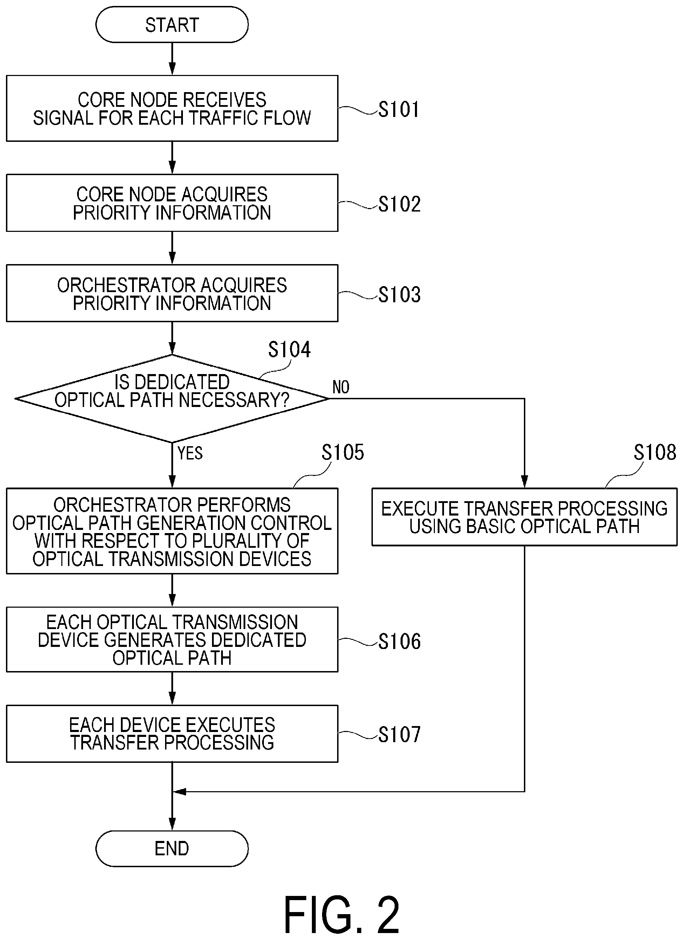

Fig. 2 is a flowchart illustrating an example of a flow of processing executed by the signal transfer system 100 according to the first embodiment. In the signal transfer system 100, the processing illustrated in Fig. 2 is repeatedly performed. Note that it is assumed that a basic optical path is generated in a wired section from the server 10 to the radio station 60 at the start of the processing in Fig. 2.

The core node 30 receives a signal for each traffic flow at the start of communication of the wireless terminal 80 (step S101). The information acquisition unit 31 included in the core node 30 acquires the priority information for each traffic flow on the basis of the received signal (step S102). The information acquisition unit 31 transmits the acquired priority information to the orchestrator 70.

The control determination unit 71 included in the orchestrator 70 acquires the priority information transmitted from the information acquisition unit 31 (step S103). The control determination unit 71 determines whether or not a dedicated optical path is necessary on the basis of the acquired priority information (step S104). If the control determination unit 71 determines that a dedicated optical path is necessary (step S104-YES), the control determination unit 71 performs the optical path generation control with respect to the optical transmission devices 20-1 to 20-4 (step S105). At this time, the control determination unit 71 also notifies the optical transmission devices 20 and the device (for example, the server 10, the core node 30, the central station 40, the distributed station 50, and the radio station 60) connected to the optical transmission devices 20 of the optical path identifier.

The control units 21-1 to 21-4 of the optical transmission devices 20-1 to 20-4 generate the dedicated optical paths in predetermined sections according to the optical path generation control of the orchestrator 70 (step S106). Thereafter, each device provided between the server 10 and the wireless terminal 80 performs input signal transfer processing (step S107). Specifically, the radio station 60 converts the signal transmitted from the wireless terminal 80 into an optical signal and outputs the optical signal to the optical transmission device 20-4. At this time, the radio station 60 determines to which of the basic optical path or the dedicated optical path the optical signal is output on the basis of the optical signal and the optical path identifier notification of which is provided from the orchestrator 70. In a case of determining to output the optical signal to the basic optical path, the radio station 60 outputs the optical signal to the basic optical path. Meanwhile, in a case of determining to output the optical signal to the dedicated optical path, the radio station 60 outputs the optical signal to the dedicated optical path.

The optical transmission device 20-4 receives the optical signal output from the radio station 60 via the optical path, which is either the basic optical path or the dedicated optical path. The control unit 21-4 of the optical transmission device 20-4 determines to which of the basic optical path or the dedicated optical path the received optical signal is output on the basis of the received optical signal and the optical path identifier notification of which is provided from the orchestrator 70. In a case of determining to output the optical signal to the basic optical path, the control unit 21-4 outputs the optical signal to the basic optical path. Meanwhile, in a case of determining to output the optical signal to the dedicated optical path, the control unit 21-4 outputs the optical signal to the dedicated optical path.

The distributed station 50 receives the optical signal output from the optical transmission device 20-4 via the optical path, which is either the basic optical path or the dedicated optical path. The distributed station 50 determines to which of the basic optical path or the dedicated optical path the optical signal is output on the basis of the received optical signal and the optical path identifier notification of which is provided from the orchestrator 70. In a case of determining to output the optical signal to the basic optical path, the distributed station 50 outputs the optical signal to the basic optical path. Meanwhile, in a case of determining to output the optical signal to the dedicated optical path, the distributed station 50 outputs the optical signal to the dedicated optical path.

The optical transmission device 20-3 receives the optical signal output from the distributed station 50 via the optical path, which is either the basic optical path or the dedicated optical path. The control unit 21-3 of the optical transmission device 20-3 determines to which of the basic optical path or the dedicated optical path the received optical signal is output on the basis of the received optical signal and the optical path identifier notification of which is provided from the orchestrator 70. In a case of determining to output the optical signal to the basic optical path, the control unit 21-3 outputs the optical signal to the basic optical path. Meanwhile, in a case of determining to output the optical signal to the dedicated optical path, the control unit 21-3 outputs the optical signal to the dedicated optical path.

The central station 40 receives the optical signal output from the optical transmission device 20-3 via the optical path, which is either the basic optical path or the dedicated optical path. The central station 40 determines to which of the basic optical path or the dedicated optical path the optical signal is output on the basis of the received optical signal and the optical path identifier notification of which is provided from the orchestrator 70. In a case of determining to output the optical signal to the basic optical path, the central station 40 outputs the optical signal to the basic optical path. Meanwhile, in a case of determining to output the optical signal to the dedicated optical path, the central station 40 outputs the optical signal to the dedicated optical path.

The optical transmission device 20-2 receives the optical signal output from the central station 40 via the optical path, which is either the basic optical path or the dedicated optical path. The control unit 21-2 of the optical transmission device 20-2 determines to which of the basic optical path or the dedicated optical path the received optical signal is output on the basis of the received optical signal and the optical path identifier notification of which is provided from the orchestrator 70. In a case of determining to output the optical signal to the basic optical path, the control unit 21-2 outputs the optical signal to the basic optical path. Meanwhile, in a case of determining to output the optical signal to the dedicated optical path, the control unit 21-2 outputs the optical signal to the dedicated optical path.

The core node 30 receives the optical signal output from the optical transmission device 20-2 via the optical path, which is either the basic optical path or the dedicated optical path. The core node 30 determines to which of the basic optical path or the dedicated optical path the optical signal is output on the basis of the received optical signal and the optical path identifier notification of which is provided from the orchestrator 70. In a case of determining to output the optical signal to the basic optical path, the core node 30 outputs the optical signal to the basic optical path. Meanwhile, in a case of determining to output the optical signal to the dedicated optical path, the core node 30 outputs the optical signal to the dedicated optical path.

The optical transmission device 20-1 receives the optical signal output from the core node 30 via the optical path, which is either the basic optical path or the dedicated optical path. The control unit 21-1 of the optical transmission device 20-1 determines to which of the basic optical path or the dedicated optical path the received optical signal is output on the basis of the received optical signal and the optical path identifier notification of which is provided from the orchestrator 70. In a case of determining to output the optical signal to the basic optical path, the control unit 21-1 outputs the optical signal to the basic optical path. Meanwhile, in a case of determining to output the optical signal to the dedicated optical path, the control unit 21-1 outputs the optical signal to the dedicated optical path.

The server 10 receives the optical signal output from the optical transmission device 20-1 via the optical path, which is either the basic optical path or the dedicated optical path. The server 10 performs signal processing on the received optical signal. The server 10 transmits a response to the optical signal to the wireless terminal 80 as necessary. In this way, in the signal transfer system 100, a signal based on a specific traffic flow among the plurality of traffic flows of the one or more wireless terminals 80 can be transferred through the dedicated optical path.

In the processing of step S104, if the control determination unit 71 determines that a dedicated optical path is not necessary (step S104-NO), the control determination unit 71 does not perform the optical path generation control with respect to the optical transmission devices 20-1 to 20-4. As a result, the transfer processing using the basic optical path is executed in the wired section from the server 10 to the radio station 60 (step S108).

With the signal transfer system 100 configured as described above, the core node 30 notifies the orchestrator 70 of the priority information for each traffic flow determined between the wireless terminal 80 and the core node 30 at the start of communication of the wireless terminal 80. The orchestrator 70 determines, based on the priority information for each traffic flow, whether the dedicated optical path is necessary for a specific traffic flow, and simultaneously instructs the optical transmission devices 20-1 to 20-4 to generate the dedicated optical path for the network section in each of the optical transmission devices 20-1 to 20-4. In a case where it is determined that the dedicated optical path for transferring a specific traffic flow of a specific wireless terminal 80 is necessary on the basis of the priority information acquired for each traffic flow, each of the optical transmission devices 20 generates the dedicated optical path in the section between the radio station 60 and the server 10, and transfers the specific traffic flow of the specific wireless terminal 80 to the server 10 via the generated dedicated optical path.

With the above configuration, it is possible to reduce a delay due to congestion with other traffic or the like by causing the specific traffic flow that needs to satisfy a strict delay requirement to pass through the dedicated optical path. As described above, according to the present example, in the end-to-end communication from the server 10 to the wireless terminal 80, it is possible to reduce the delay of the specific traffic flow of the specific wireless terminal 80 for which the dedicated optical path has been generated as compared with the conventional art that uses only the basic optical path.

### (Modification of First Embodiment)

The signal transfer system 100 is not necessarily applied to a mobile communication system, and may be applied to a wireless communication system other than the mobile communication system. In this case, the signal transfer system 100 does not include, for example, the central station 40 or the distributed station 50, and it is sufficient if the radio station 60 is regarded as a Wi-Fi (registered trademark) access point and the core node 30 is regarded as a Wi-Fi controller.

### (Second Embodiment)

In a second embodiment, a configuration in which a central station, not a core node, notifies an orchestrator of priority information will be described.

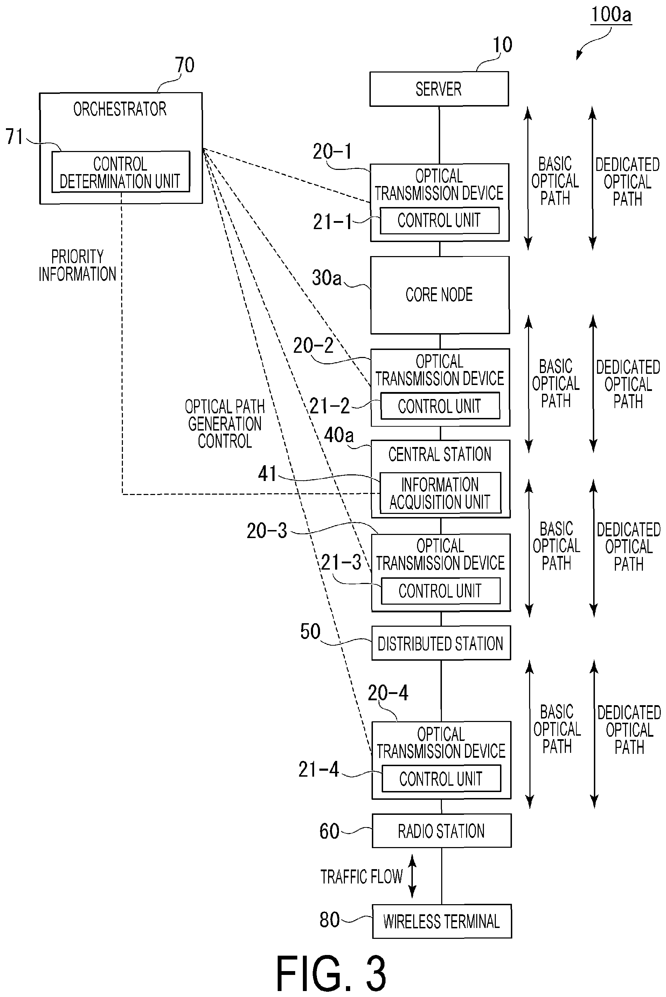

Fig. 3 is a diagram illustrating a configuration example of a signal transfer system 100a according to the second embodiment. The signal transfer system 100a is a system that transfers a signal from one communication device to another communication device. The signal transfer system 100a includes, for example, a server 10, a plurality of optical transmission devices 20-1 to 20-4, a core node 30a, a central station 40a, a distributed station 50, a radio station 60, and an orchestrator 70. Fig. 3 illustrates a configuration in which the signal transfer system 100a includes four optical transmission devices 20, but the number of the optical transmission devices 20 is not limited as long as the number is plural.

The signal transfer system 100a is basically similar to the signal transfer system 100 except that the core node 30a corresponding to the core node 30 does not include the information acquisition unit 31, and the central station 40a corresponding to the central station 40 includes an information acquisition unit 41, and the orchestrator 70 acquires the priority information for each traffic flow from the information acquisition unit 41 of the central station 40a. Hereinafter, differences from the signal transfer system 100 will be mainly described.

The core node 30a and the central station 40a are configured using, for example, a processor such as a CPU, a memory, and a communication interface. Each device of the core node 30a and the central station 40a functions as a communication device including a control unit when the processor executes a program.

The control units included in the core node 30a and the central station 40a provide each function for causing the communication device to function as the core node 30a or the central station 40a. Note that all or some of the functions of the control unit may be implemented by using hardware such as an ASIC, a PLD, or an FPGA. The aforementioned program may be recorded in a computer-readable recording medium. Examples of the computer-readable recording medium include a portable medium such as a flexible disk, a magneto-optical disc, ROM, a CD-ROM, and a semiconductor storage device (for example, an SSD), and a storage device such as a hard disk and a semiconductor storage device built in a computer system. The aforementioned program may be transmitted via a telecommunication line.

The central station 40a includes the information acquisition unit 41. The information acquisition unit 41 acquires the priority information for each traffic flow exchanged between the wireless terminal 80 and the core node 30a. The information acquisition unit 41 notifies the orchestrator 70 of the acquired priority information.

In the signal transfer system 100a according to the second embodiment, the information acquisition unit 41 is included in the control unit of the central station 40a.

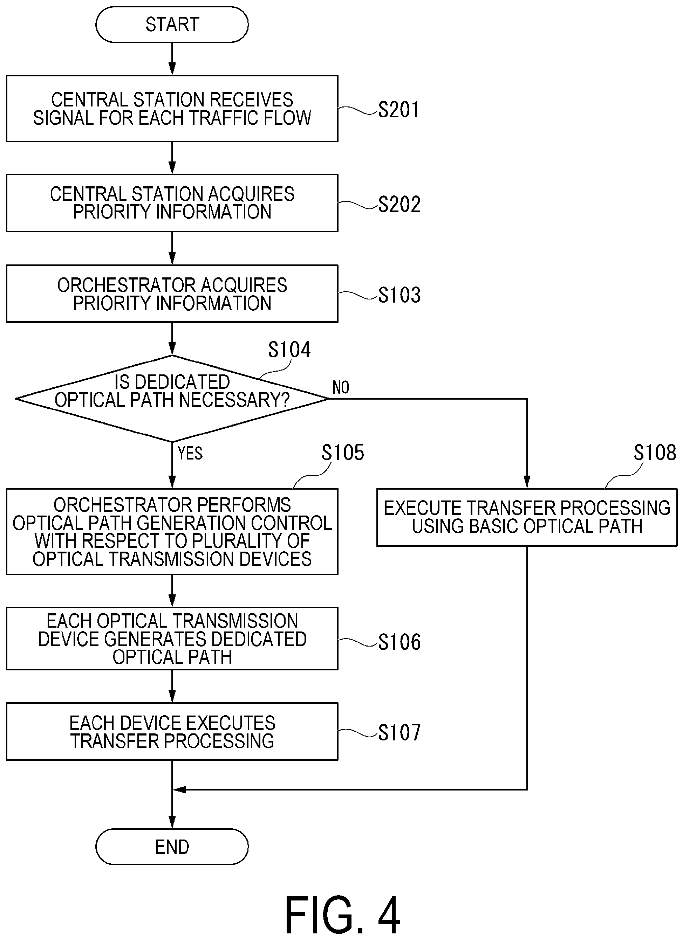

Fig. 4 is a flowchart illustrating an example of a flow of processing executed by the signal transfer system 100a according to the second embodiment. In the signal transfer system 100a, the processing illustrated in Fig. 4 is repeatedly performed. Note that it is assumed that a basic optical path is generated in a wired section from the server 10 to the radio station 60 at the start of the processing in Fig. 4. In Fig. 4, the same processing as that in Fig. 2 is denoted by the same reference numeral as that in Fig. 2, and description thereof will be omitted.

The central station 40a receives a signal for each traffic flow at the start of communication of the wireless terminal 80 (step S201). The information acquisition unit 41 included in the central station 40a acquires the priority information for each traffic flow on the basis of the received signal (step S202). The information acquisition unit 41 transmits the acquired priority information to the orchestrator 70. Thereafter, the processing from steps S103 to S108 is executed. Note that it is sufficient if the core node 30 and the central station 40 in the processing from steps S103 to S108 are replaced with the core node 30a and the central station 40a.

With the signal transfer system 100a configured as described above, the central station 40a notifies the orchestrator 70 of the priority information for each traffic flow. As a result, the signal transfer system 100a can obtain the same effects as that of the first embodiment.

### (Third Embodiment)

In a third embodiment, a configuration in which a distributed station, not a core node, notifies an orchestrator of priority information will be described.

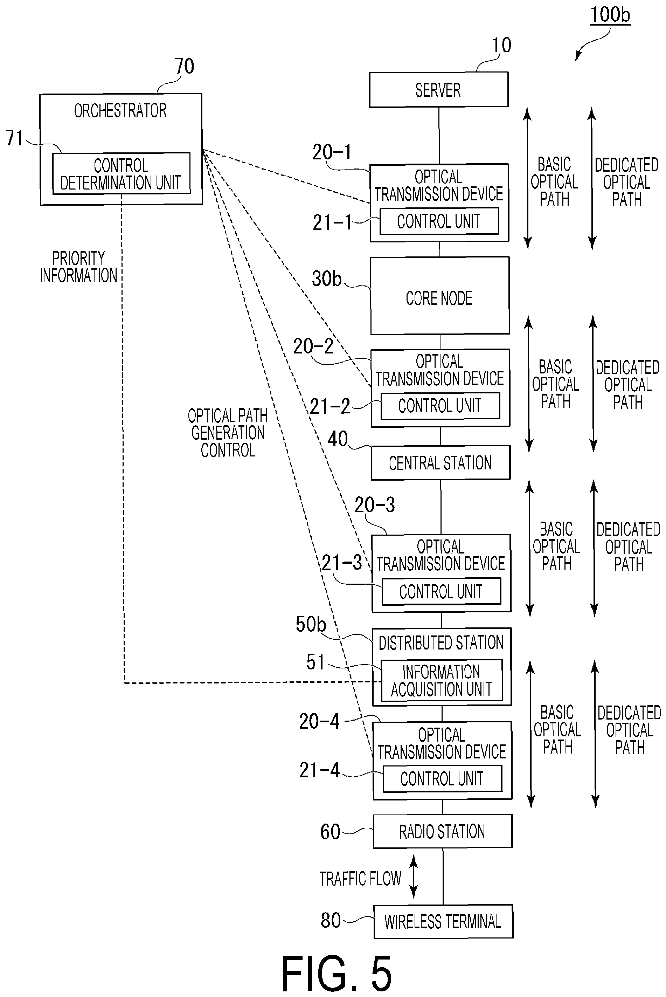

Fig. 5 is a diagram illustrating a configuration example of a signal transfer system 100b according to the third embodiment. The signal transfer system 100b is a system that transfers a signal from one communication device to another communication device. The signal transfer system 100b includes, for example, a server 10, a plurality of optical transmission devices 20-1 to 20-4, a core node 30b, a central station 40, a distributed station 50b, a radio station 60, and an orchestrator 70. Fig. 5 illustrates a configuration in which the signal transfer system 100b includes four optical transmission devices 20, but the number of the optical transmission devices 20 is not limited as long as the number is plural.

The signal transfer system 100b is basically similar to the signal transfer system 100 except that the core node 30b corresponding to the core node 30 does not include the information acquisition unit 31, and the distributed station 50b corresponding to the distributed station 50 includes an information acquisition unit 51, and the orchestrator 70 acquires the priority information for each traffic flow from the information acquisition unit 51 of the distributed station 50b. Hereinafter, differences from the signal transfer system 100 will be mainly described.

The core node 30b and the distributed station 50b are configured using, for example, a processor such as a CPU, a memory, and a communication interface. Each device of the core node 30b and the distributed station 50b functions as a communication device including a control unit when the processor executes a program.

The control units included in the core node 30b and the distributed station 50b provide each function for causing the communication device to function as the core node 30b or the distributed station 50b. Note that all or some of the functions of the control unit may be implemented by using hardware such as an ASIC, a PLD, or an FPGA. The aforementioned program may be recorded in a computer-readable recording medium. Examples of the computer-readable recording medium include a portable medium such as a flexible disk, a magneto-optical disc, ROM, a CD-ROM, and a semiconductor storage device (for example, an SSD), and a storage device such as a hard disk and a semiconductor storage device built in a computer system. The aforementioned program may be transmitted via a telecommunication line.

The distributed station 50b includes the information acquisition unit 51. The information acquisition unit 51 acquires the priority information for each traffic flow exchanged between the wireless terminal 80 and the core node 30b. The information acquisition unit 51 notifies the orchestrator 70 of the acquired priority information.

In the signal transfer system 100b according to the third embodiment, the information acquisition unit 51 is included in the control unit of the distributed station 50b.

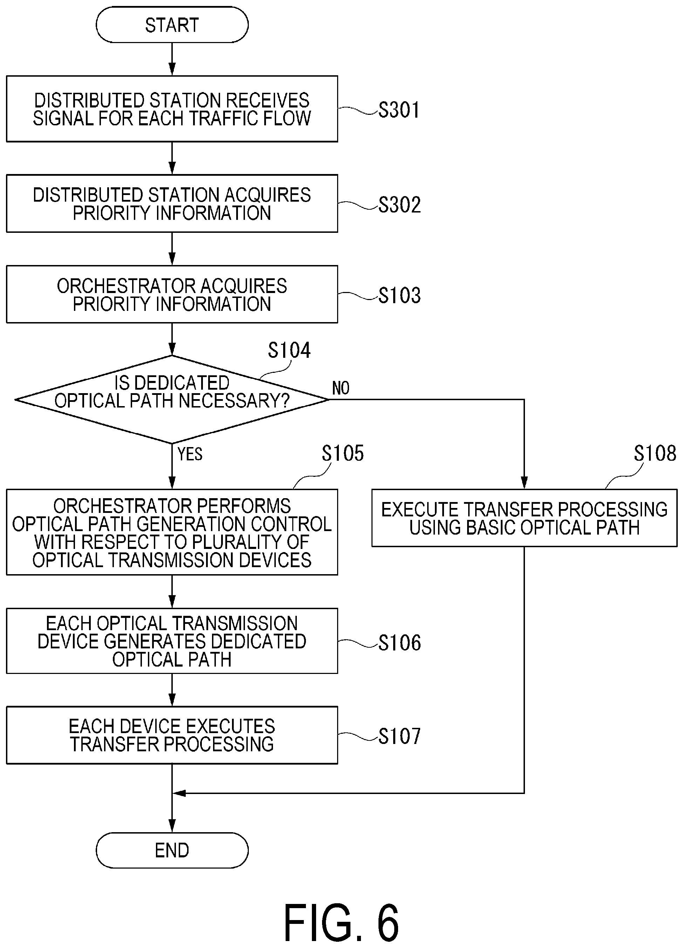

Fig. 6 is a flowchart illustrating an example of a flow of processing executed by the signal transfer system 100b according to the third embodiment. In the signal transfer system 100b, the processing illustrated in Fig. 6 is repeatedly performed. Note that it is assumed that a basic optical path is generated in a wired section from the server 10 to the radio station 60 at the start of the processing in Fig. 6. In Fig. 6, the same processing as that in Fig. 2 is denoted by the same reference numeral as that in Fig. 2, and description thereof will be omitted.

The distributed station 50b receives a signal for each traffic flow at the start of communication of the wireless terminal 80 (step S301). The information acquisition unit 51 included in the distributed station 50b acquires the priority information for each traffic flow on the basis of the received signal (step S302). The information acquisition unit 51 transmits the acquired priority information to the orchestrator 70. Thereafter, the processing from steps S103 to S108 is executed. Note that it is sufficient if the core node 30 and the distributed station 50 in the processing from steps S103 to S108 are replaced with the core node 30b and the distributed station 50b.

With the signal transfer system 100b configured as described above, the distributed station 50b notifies the orchestrator 70 of the priority information for each traffic flow. As a result, the signal transfer system 100b can obtain the same effects as that of the first embodiment.

### (Fourth Embodiment)

In a fourth embodiment, a configuration in which a radio station, not a core node, notifies an orchestrator of priority information will be described.

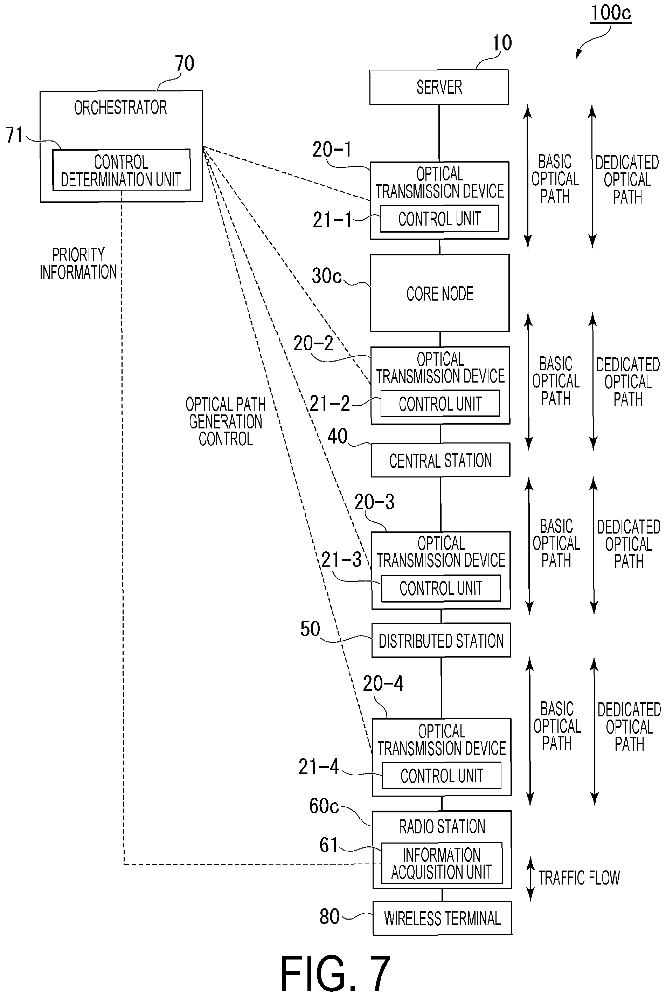

Fig. 7 is a diagram illustrating a configuration example of a signal transfer system 100c according to the fourth embodiment. The signal transfer system 100c is a system that transfers a signal from one communication device to another communication device. The signal transfer system 100c includes, for example, a server 10, a plurality of optical transmission devices 20-1 to 20-4, a core node 30c, a central station 40, a distributed station 50, a radio station 60c, and an orchestrator 70. Fig. 7 illustrates a configuration in which the signal transfer system 100c includes four optical transmission devices 20, but the number of the optical transmission devices 20 is not limited as long as the number is plural.

The signal transfer system 100c is basically similar to the signal transfer system 100 except that the core node 30c corresponding to the core node 30 does not include the information acquisition unit 31, and the radio station 60c corresponding to the radio station 60 includes an information acquisition unit 61, and the orchestrator 70 acquires the priority information for each traffic flow from the information acquisition unit 61 of the radio station 60c. Hereinafter, differences from the signal transfer system 100 will be mainly described.

The core node 30c and the radio station 60c are configured using, for example, a processor such as a CPU, a memory, and a communication interface. Each device of the core node 30c and the radio station 60c functions as a communication device including a control unit when the processor executes a program.

The control units included in the core node 30c and the radio station 60c provide each function for causing the communication device to function as the core node 30c or the radio station 60c. Note that all or some of the functions of the control unit may be implemented by using hardware such as an ASIC, a PLD, or an FPGA. The aforementioned program may be recorded in a computer-readable recording medium. Examples of the computer-readable recording medium include a portable medium such as a flexible disk, a magneto-optical disc, ROM, a CD-ROM, and a semiconductor storage device (for example, an SSD), and a storage device such as a hard disk and a semiconductor storage device built in a computer system. The aforementioned program may be transmitted via a telecommunication line.

The radio station 60c includes the information acquisition unit 61. The information acquisition unit 61 acquires the priority information for each traffic flow exchanged between the wireless terminal 80 and the core node 30c. The information acquisition unit 61 notifies the orchestrator 70 of the acquired priority information.

In the signal transfer system 100c according to the fourth embodiment, the information acquisition unit 61 is included in the control unit of the radio station 60c.

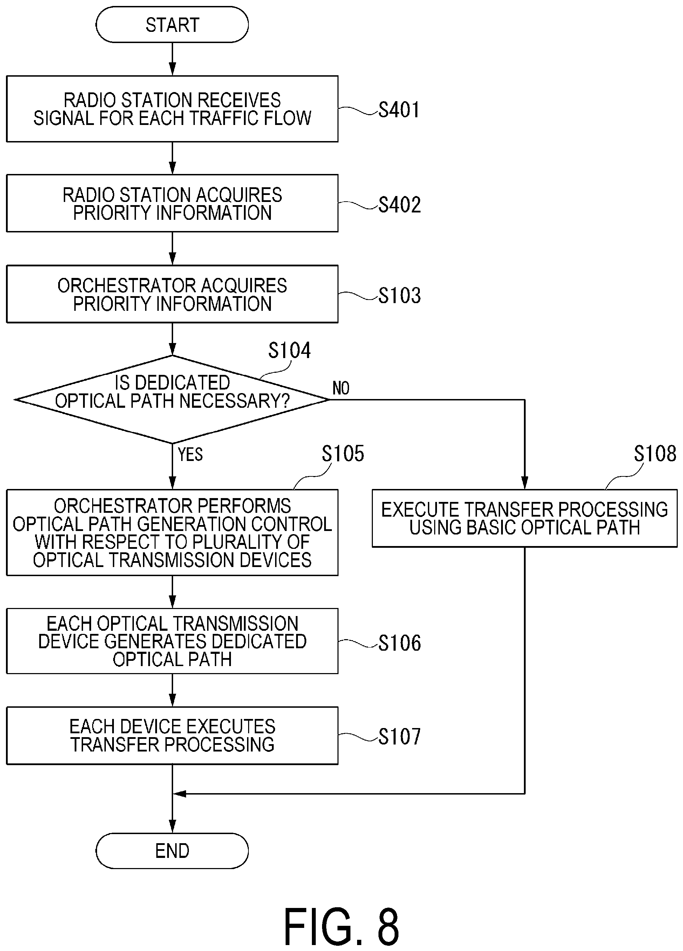

Fig. 8 is a flowchart illustrating an example of a flow of processing executed by the signal transfer system 100c according to the fourth embodiment. In the signal transfer system 100c, the processing illustrated in Fig. 8 is repeatedly performed. Note that it is assumed that a basic optical path is generated in a wired section from the server 10 to the radio station 60c at the start of the processing in Fig. 8. In Fig. 8, the same processing as that in Fig. 2 is denoted by the same reference numeral as that in Fig. 2, and description thereof will be omitted.

The radio station 60c receives a signal for each traffic flow at the start of communication of the wireless terminal 80 (step S401). The information acquisition unit 61 included in the radio station 60c acquires the priority information for each traffic flow on the basis of the received signal (step S402). The information acquisition unit 61 transmits the acquired priority information to the orchestrator 70. Thereafter, the processing from steps S103 to S108 is executed. Note that it is sufficient if the core node 30 and the radio station 60 in the processing from steps S103 to S108 are replaced with the core node 30c and the radio station 60c.

With the signal transfer system 100c configured as described above, the radio station 60c notifies the orchestrator 70 of the priority information for each traffic flow. As a result, the signal transfer system 100c can obtain the same effects as that of the first embodiment.

### (Modification of Fourth Embodiment)

The signal transfer system 100c is not necessarily applied to the mobile communication system, and may be applied to a wireless communication system other than the mobile communication system. In this case, the signal transfer system 100c does not include, for example, the central station 40 or the distributed station 50, and it is sufficient if the radio station 60c is regarded as a Wi-Fi (registered trademark) access point and the core node 30c is regarded as a Wi-Fi controller.

### (Fifth Embodiment)

In a fifth embodiment, a configuration in which a core node includes an information acquisition unit, an orchestrator is divided into a base station controller and an optical transmission device controller, and the two controllers perform control in cooperation will be described.

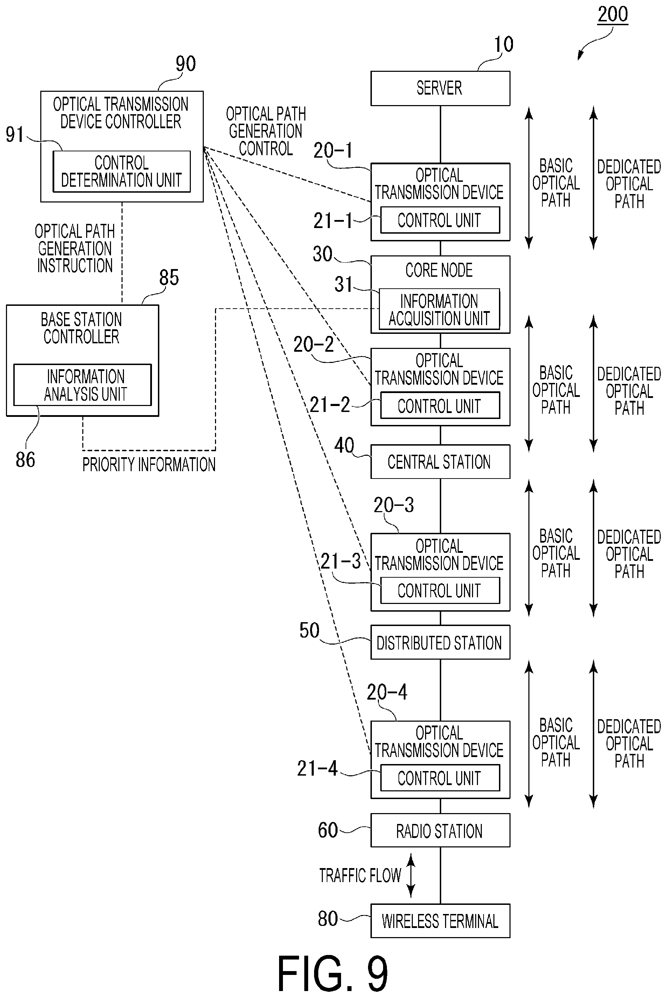

Fig. 9 is a diagram illustrating a configuration example of a signal transfer system 200 according to the fifth embodiment. The signal transfer system 200 is a system that transfers a signal from one communication device to another communication device. The signal transfer system 200 includes, for example, a server 10, a plurality of optical transmission devices 20-1 to 20-4, a core node 30, a central station 40, a distributed station 50, a radio station 60, a base station controller 85, and an optical transmission device controller 90. Fig. 9 illustrates a configuration in which the signal transfer system 200 includes four optical transmission devices 20, but the number of the optical transmission devices 20 is not limited as long as the number is plural.

The signal transfer system 200 is basically similar to the signal transfer system 100 except that the orchestrator 70 is not provided and the base station controller 85 and the optical transmission device controller 90 are provided. Hereinafter, differences from the signal transfer system 100 will be mainly described.

The base station controller 85 acquires priority information for each traffic from the core node 30. The base station controller 85 determines whether or not a dedicated optical path is necessary for a specific traffic flow of the wireless terminal 80 on the basis of the acquired priority information for each traffic flow. In a case of determining that the dedicated optical path is necessary, the base station controller 85 instructs the optical transmission device controller 90 to generate the dedicated optical path.

The optical transmission device controller 90 controls each device (for example, the optical transmission devices 20-1 to 20-4, the core node 30, the central station 40, the distributed station 50, and the radio station 60) provided between the server 10 and the wireless terminal 80. The optical transmission device controller 90 simultaneously performs optical path generation control on each of the optical transmission devices 20-1 to 20-4 in response to the dedicated optical path generation instruction from the base station controller 85.

As described above, in the fifth embodiment, since the optical transmission device controller 90 simultaneously performs the optical path generation control on each of the optical transmission devices 20-1 to 20-4, each of the optical transmission devices 20-1 to 20-4 performs the dedicated optical path generation processing in response to the instruction from the optical transmission device controller 90.

Each of the optical transmission devices 20-1 to 20-4, the core node 30, the central station 40, the distributed station 50, the radio station 60, the base station controller 85, and the optical transmission device controller 90 included in the signal transfer system 200 are configured using, for example, a processor such as a CPU, a memory, and a communication interface. Each device of each of the optical transmission devices 20-1 to 20-4, the core node 30, the central station 40, the distributed station 50, the radio station 60, the base station controller 85, and the optical transmission device controller 90 functions as a communication device including a control unit when the processor executes a program.

The control unit provides each function for causing the communication device to function as the optical transmission devices 20-1 to 20-4, the core node 30, the central station 40, the distributed station 50, the radio station 60, the base station controller 85, or the optical transmission device controller 90. Note that all or some of the functions of the control unit may be implemented by using hardware such as an ASIC, a PLD, or an FPGA.

The aforementioned program may be recorded in a computer-readable recording medium. Examples of the computer-readable recording medium include a portable medium such as a flexible disk, a magneto-optical disc, ROM, a CD-ROM, and a semiconductor storage device (for example, a solid state drive (SSD)), and a storage device such as a hard disk and a semiconductor storage device built in a computer system. The aforementioned program may be transmitted via a telecommunication line.

Next, a specific configuration of each device will be described. The base station controller 85 includes an information analysis unit 86. The information analysis unit 86 acquires the priority information acquired by the information acquisition unit 31 of the core node 30. The information analysis unit 86 determines whether or not the dedicated optical path is necessary for a specific traffic flow of the wireless terminal 80 on the basis of the acquired priority information. Specifically, in a case where a predetermined determination criterion is satisfied on the basis of the priority information, the information analysis unit 86 determines that the dedicated optical path is necessary for the traffic flow from which the priority information is acquired. In a case where a predetermined determination criterion is not satisfied on the basis of the priority information, the information analysis unit 86 determines that the dedicated optical path is not necessary for the traffic flow from which the priority information is acquired.

In a case where the predetermined determination criterion is satisfied, the information analysis unit 86 transmits an optical path generation instruction to the optical transmission device controller 90. The optical path generation instruction is a control signal for providing notification that generation of the dedicated optical path is necessary. When transmitting the optical path generation instruction, the information analysis unit 86 notifies the optical transmission device controller 90 of an optical path identifier of the dedicated optical path.

The optical transmission device controller 90 includes a control determination unit 91. When the optical path generation instruction is received from the base station controller 85, the control determination unit 91 performs the optical path generation control of the dedicated optical path with respect to the optical transmission devices 20-1 to 20-4. When performing the optical path generation control, the control determination unit 91 notifies the optical transmission devices 20-1 to 20-4 of the optical path identifier of the dedicated optical path. Further, the control determination unit 91 notifies the optical transmission devices 20-1 to 20-4 of the optical path identifier of the dedicated optical path and also with respect to the device (for example, the server 10, the core node 30, the central station 40, the distributed station 50, and the radio station 60) connected to the optical transmission devices 20.

The device (for example, the server 10, the core node 30, the central station 40, the distributed station 50, and the radio station 60) connected to the optical transmission devices 20 determines to which of the basic optical path or the dedicated optical path the input optical signal is output according to the optical path identifier notification of which is provided from the optical transmission device controller 90.

In the signal transfer system 200 according to the fifth embodiment, the information acquisition unit 31 is included in a control unit of the core node 30, the information analysis unit 86 is included in a control unit of the base station controller 85, and the control determination unit 91 is included in a control unit of the optical transmission device controller 90.

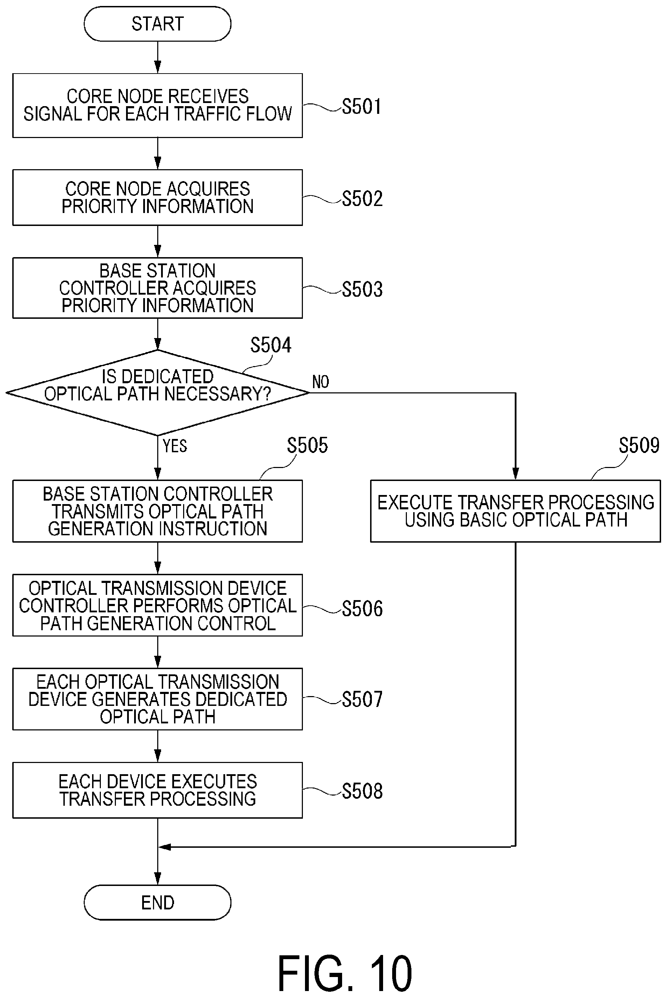

Fig. 10 is a flowchart illustrating an example of a flow of processing executed by the signal transfer system 200 according to the fifth embodiment. In the signal transfer system 200, the processing illustrated in Fig. 10 is repeatedly performed. Note that it is assumed that a basic optical path is generated in a wired section from the server 10 to the radio station 60 at the start of the processing in Fig. 10.

The core node 30 receives a signal for each traffic flow at the start of communication of the wireless terminal 80 (step S501). The information acquisition unit 31 included in the core node 30 acquires the priority information for each traffic flow on the basis of the received signal (step S502). The information acquisition unit 31 transmits the acquired priority information to the base station controller 85.

The information analysis unit 86 included in the base station controller 85 acquires the priority information transmitted from the information acquisition unit 31 (step S503). The information analysis unit 86 determines whether or not a dedicated optical path is necessary on the basis of the acquired priority information (step S504). If the information analysis unit 86 determines that a dedicated optical path is necessary (step S504-YES), the information analysis unit 86 transmits the optical path generation instruction to the optical transmission device controller 90 (step S505).

The control determination unit 91 included in the optical transmission device controller 90 acquires the optical path generation instruction transmitted from the base station controller 85. The control determination unit 91 performs the optical path generation control with respect to the optical transmission devices 20-1 to 20-4 on the basis of the acquired optical path generation instruction (step S506). At this time, the control determination unit 91 also notifies the device (for example, the server 10, the core node 30, the central station 40, the distributed station 50, and the radio station 60) connected to the optical transmission devices 20 of the optical path identifier.

The control units 21-1 to 21-4 of the optical transmission devices 20-1 to 20-4 generate the dedicated optical paths in predetermined sections according to the optical path generation control of the optical transmission device controller 90 (step S507). Thereafter, each device provided between the server 10 and the wireless terminal 80 performs input signal transfer processing (step S508). The transfer processing in step S508 is similar to step S107 according to the first embodiment except that each device provided between the server 10 and the wireless terminal 80 determines to which of the basic optical path or the dedicated optical path the optical signal is output on the basis of the optical path identifier notification of which is provided from the optical transmission device controller 90, and thus description thereof is omitted.

In the processing of step S504, if the information analysis unit 86 determines that a dedicated optical path is not necessary (step S504-NO), the information analysis unit 86 does not transmit the optical path generation instruction to the optical transmission device controller 90. As a result, the transfer processing using the basic optical path is executed in the wired section from the server 10 to the radio station 60 (step S509).

With the signal transfer system 200 configured as described above, the core node 30 notifies the base station controller 85 of the priority information for each traffic flow determined between the wireless terminal 80 and the core node 30 at the start of communication of the wireless terminal 80. The base station controller 85 determines, based on the priority information for each traffic flow, whether the dedicated optical path is necessary for a specific traffic flow, and instructs the optical transmission device controller 90 to generate a dedicated optical path in a case where there is a specific traffic flow for which a dedicated optical path is necessary. The optical transmission device controller 90 simultaneously instructs the optical transmission devices 20-1 to 20-4 to generate the dedicated optical path for the network section of each of the optical transmission devices 20-1 to 20-4 in response to the instruction from the base station controller 85. In a case where it is determined that the dedicated optical path for transferring a specific traffic flow of a specific wireless terminal 80 is necessary on the basis of the priority information acquired for each traffic flow, each of the optical transmission devices 20 generates the dedicated optical path in the section between the radio station 60 and the server 10, and transfers the specific traffic flow of the specific wireless terminal 80 to the server 10 via the generated dedicated optical path.

With the above configuration, it is possible to reduce a delay due to congestion with other traffic or the like by causing the specific traffic flow that needs to satisfy a strict delay requirement to pass through the dedicated optical path. As described above, according to the present example, in the end-to-end communication from the server 10 to the wireless terminal 80, it is possible to reduce the delay of the specific traffic flow of the specific wireless terminal 80 for which the dedicated optical path has been generated as compared with the conventional art that uses only the basic optical path.

### (Modification of Fifth Embodiment)

The signal transfer system 200 is not necessarily applied to a mobile communication system, and may be applied to a wireless communication system other than the mobile communication system. In this case, the signal transfer system 200 does not include, for example, the central station 40 or the distributed station 50, and it is sufficient if the radio station 60 is regarded as a Wi-Fi (registered trademark) access point and the core node 30 is regarded as a Wi-Fi controller.

### (Sixth Embodiment)

In a sixth embodiment, a configuration in which a central station, not a core node, notifies a base station controller of priority information will be described.

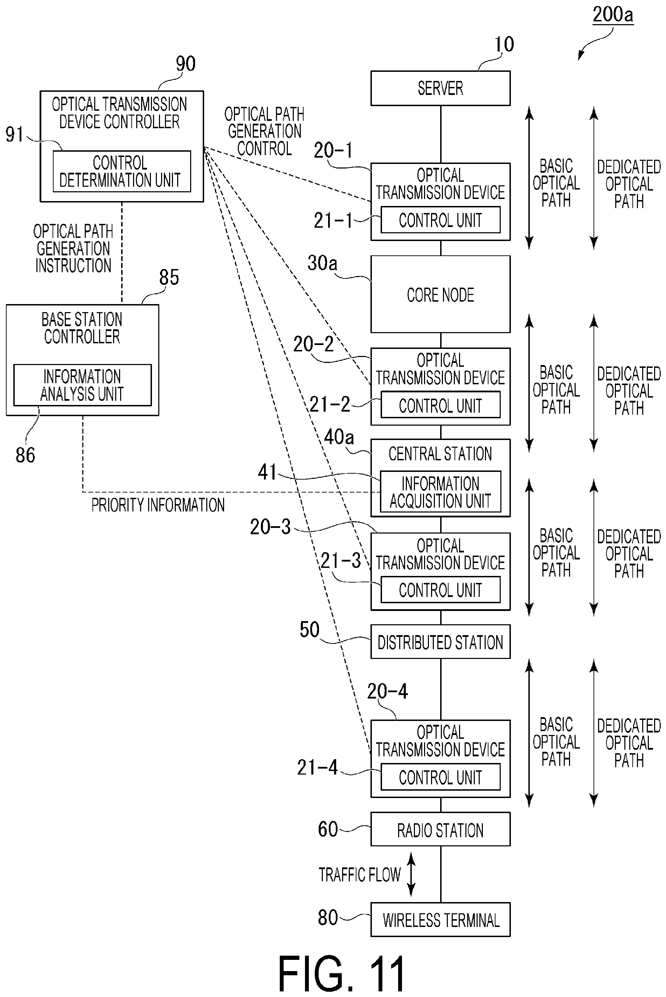

Fig. 11 is a diagram illustrating a configuration example of a signal transfer system 200a according to the sixth embodiment. The signal transfer system 200a is a system that transfers a signal from one communication device to another communication device. The signal transfer system 200a includes, for example, a server 10, a plurality of optical transmission devices 20-1 to 20-4, a core node 30a, a central station 40a, a distributed station 50, a radio station 60, a base station controller 85, and an optical transmission device controller 90. Fig. 11 illustrates a configuration in which the signal transfer system 200a includes four optical transmission devices 20, but the number of the optical transmission devices 20 is not limited as long as the number is plural.

The signal transfer system 200a is basically similar to the signal transfer system 200 except that the core node 30a corresponding to the core node 30 does not include the information acquisition unit 31, and the central station 40a corresponding to the central station 40 includes an information acquisition unit 41, and the base station controller 85 acquires the priority information for each traffic flow from the information acquisition unit 41 of the central station 40a. Hereinafter, differences from the signal transfer system 200 will be mainly described.

The core node 30a and the central station 40a are configured using, for example, a processor such as a CPU, a memory, and a communication interface. Each device of the core node 30a and the central station 40a functions as a communication device including a control unit when the processor executes a program.

The control units included in the core node 30a and the central station 40a provide each function for causing the communication device to function as the core node 30a or the central station 40a. Note that all or some of the functions of the control unit may be implemented by using hardware such as an ASIC, a PLD, or an FPGA. The aforementioned program may be recorded in a computer-readable recording medium. Examples of the computer-readable recording medium include a portable medium such as a flexible disk, a magneto-optical disc, ROM, a CD-ROM, and a semiconductor storage device (for example, an SSD), and a storage device such as a hard disk and a semiconductor storage device built in a computer system. The aforementioned program may be transmitted via a telecommunication line.

The central station 40a includes the information acquisition unit 41. The information acquisition unit 41 acquires the priority information for each traffic flow exchanged between the wireless terminal 80 and the core node 30a. The information acquisition unit 41 notifies the base station controller 85 of the acquired priority information.

In the signal transfer system 200a according to the sixth embodiment, the information acquisition unit 41 is included in the control unit of the central station 40a.

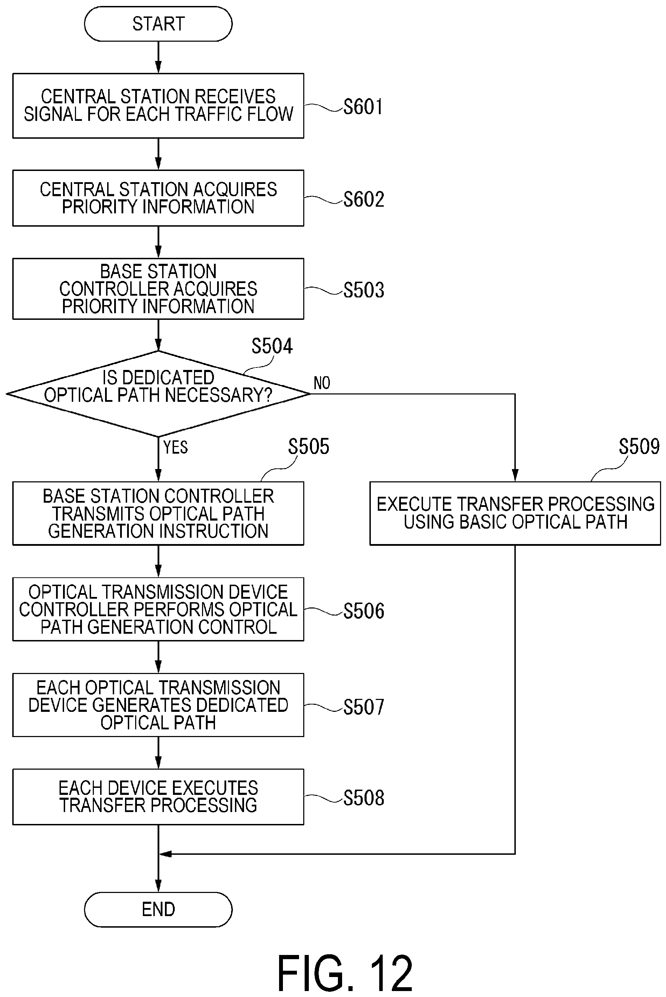

Fig. 12 is a flowchart illustrating an example of a flow of processing executed by the signal transfer system 200a according to the sixth embodiment. In the signal transfer system 200a, the processing illustrated in Fig. 12 is repeatedly performed. Note that it is assumed that a basic optical path is generated in a wired section from the server 10 to the radio station 60 at the start of the processing in Fig. 12. In Fig. 12, the same processing as that in Fig. 10 is denoted by the same reference numeral as that in Fig. 10, and description thereof will be omitted.

The central station 40a receives a signal for each traffic flow at the start of communication of the wireless terminal 80 (step S601). The information acquisition unit 41 included in the central station 40a acquires the priority information for each traffic flow on the basis of the received signal (step S602). The information acquisition unit 41 transmits the acquired priority information to the base station controller 85. Thereafter, the processing from steps S503 to S509 is executed. Note that it is sufficient if the core node 30 and the central station 40 in the processing from steps S503 to S509 are replaced with the core node 30a and the central station 40a.

With the signal transfer system 200a configured as described above, the central station 40a notifies the base station controller 85 of the priority information for each traffic flow. As a result, the signal transfer system 200a can obtain the same effects as that of the fifth embodiment.

### (Seventh Embodiment)

In a seventh embodiment, a configuration in which a distributed station, not a core node, notifies a base station controller of priority information will be described.

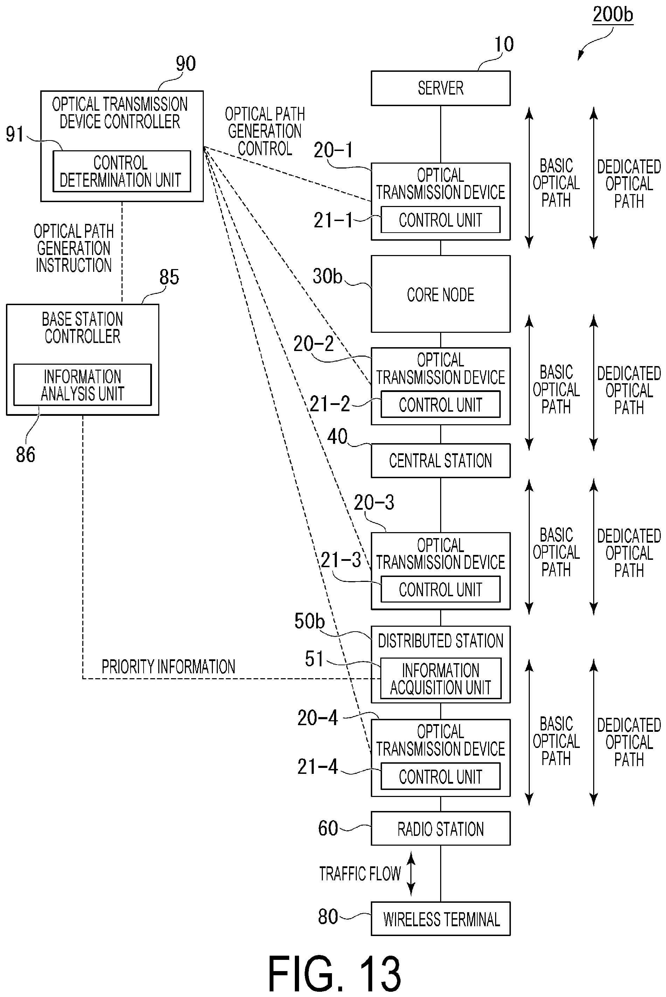

Fig. 13 is a diagram illustrating a configuration example of a signal transfer system 200b according to the seventh embodiment. The signal transfer system 200b is a system that transfers a signal from one communication device to another communication device. The signal transfer system 200b includes, for example, a server 10, a plurality of optical transmission devices 20-1 to 20-4, a core node 30b, a central station 40, a distributed station 50b, a radio station 60, a base station controller 85, and an optical transmission device controller 90. Fig. 13 illustrates a configuration in which the signal transfer system 200b includes four optical transmission devices 20, but the number of the optical transmission devices 20 is not limited as long as the number is plural.

The signal transfer system 200b is basically similar to the signal transfer system 200 except that the core node 30b corresponding to the core node 30 does not include the information acquisition unit 31, and the distributed station 50b corresponding to the distributed station 50 includes an information acquisition unit 51, and the base station controller 85 acquires the priority information for each traffic flow from the information acquisition unit 51 of the distributed station 50b. Hereinafter, differences from the signal transfer system 200 will be mainly described.

The core node 30b and the distributed station 50b are configured using, for example, a processor such as a CPU, a memory, and a communication interface. Each device of the core node 30b and the distributed station 50b functions as a communication device including a control unit when the processor executes a program.

The control units included in the core node 30b and the distributed station 50b provide each function for causing the communication device to function as the core node 30b or the distributed station 50b. Note that all or some of the functions of the control unit may be implemented by using hardware such as an ASIC, a PLD, or an FPGA. The aforementioned program may be recorded in a computer-readable recording medium. Examples of the computer-readable recording medium include a portable medium such as a flexible disk, a magneto-optical disc, ROM, a CD-ROM, and a semiconductor storage device (for example, an SSD), and a storage device such as a hard disk and a semiconductor storage device built in a computer system. The aforementioned program may be transmitted via a telecommunication line.

The distributed station 50b includes the information acquisition unit 51. The information acquisition unit 51 acquires the priority information for each traffic flow exchanged between the wireless terminal 80 and the core node 30b. The information acquisition unit 51 notifies the base station controller 85 of the acquired priority information.

In the signal transfer system 200b according to the seventh embodiment, the information acquisition unit 51 is included in the control unit of the distributed station 50b.

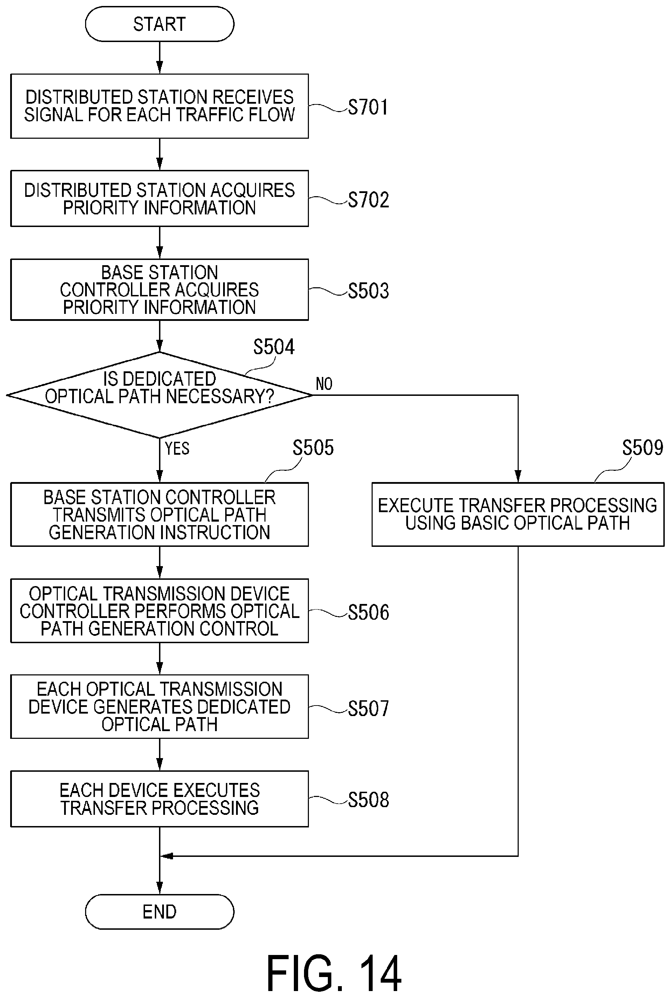

Fig. 14 is a flowchart illustrating an example of a flow of processing executed by the signal transfer system 200b according to the seventh embodiment. In the signal transfer system 200b, the processing illustrated in Fig. 14 is repeatedly performed. Note that it is assumed that a basic optical path is generated in a wired section from the server 10 to the radio station 60 at the start of the processing in Fig. 6. In Fig. 14, the same processing as that in Fig. 10 is denoted by the same reference numeral as that in Fig. 10, and description thereof will be omitted.

The distributed station 50b receives a signal for each traffic flow at the start of communication of the wireless terminal 80 (step S701). The information acquisition unit 51 included in the distributed station 50b acquires the priority information for each traffic flow on the basis of the received signal (step S702). The information acquisition unit 51 transmits the acquired priority information to the base station controller 85. Thereafter, the processing from steps S503 to S509 is executed. Note that it is sufficient if the core node 30 and the distributed station 50 in the processing from steps S503 to S509 are replaced with the core node 30b and the distributed station 50b.

With the signal transfer system 200b configured as described above, the distributed station 50b notifies the base station controller 85 of the priority information for each traffic flow. As a result, the signal transfer system 200b can obtain the same effects as that of the fifth embodiment.

### (Eighth Embodiment)

In an eighth embodiment, a configuration in which a radio station, not a core node, notifies a base station controller of priority information will be described.

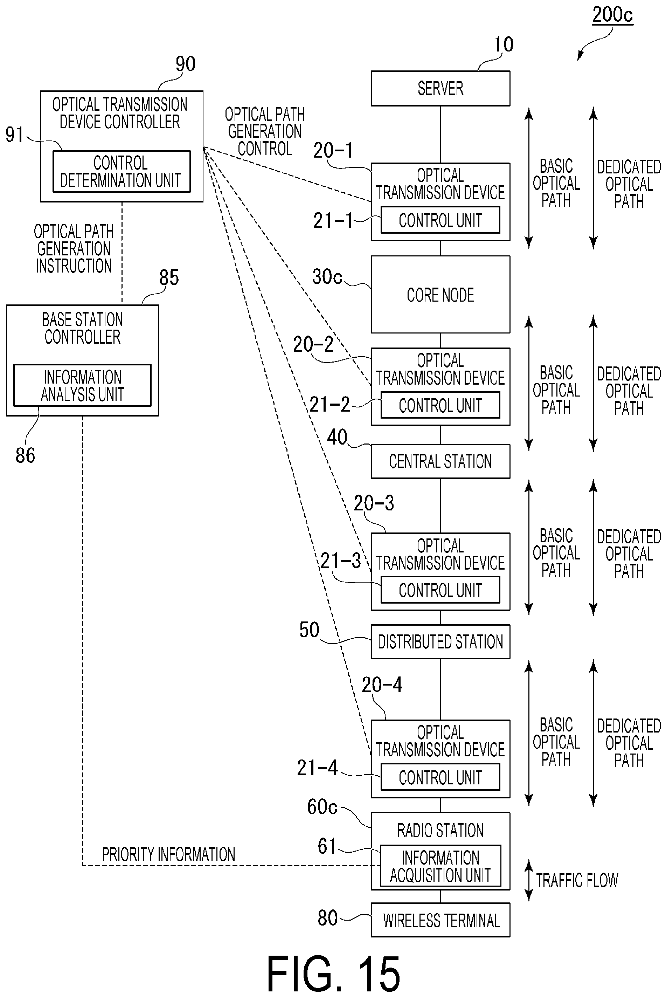

Fig. 15 is a diagram illustrating a configuration example of a signal transfer system 200c according to the eighth embodiment. The signal transfer system 200c is a system that transfers a signal from one communication device to another communication device. The signal transfer system 200c includes, for example, a server 10, a plurality of optical transmission devices 20-1 to 20-4, a core node 30c, a central station 40, a distributed station 50, a radio station 60c, a base station controller 85, and an optical transmission device controller 90. Fig. 15 illustrates a configuration in which the signal transfer system 200c includes four optical transmission devices 20, but the number of the optical transmission devices 20 is not limited as long as the number is plural.

The signal transfer system 200c is basically similar to the signal transfer system 200 except that the core node 30c corresponding to the core node 30 does not include the information acquisition unit 31, and the radio station 60c corresponding to the radio station 60 includes an information acquisition unit 61, and the base station controller 85 acquires the priority information for each traffic flow from the information acquisition unit 61 of the radio station 60c. Hereinafter, differences from the signal transfer system 200 will be mainly described.

The core node 30c and the radio station 60c are configured using, for example, a processor such as a CPU, a memory, and a communication interface. Each device of the core node 30c and the radio station 60c functions as a communication device including a control unit when the processor executes a program.

The control units included in the core node 30c and the radio station 60c provide each function for causing the communication device to function as the core node 30c or the radio station 60c. Note that all or some of the functions of the control unit may be implemented by using hardware such as an ASIC, a PLD, or an FPGA. The aforementioned program may be recorded in a computer-readable recording medium. Examples of the computer-readable recording medium include a portable medium such as a flexible disk, a magneto-optical disc, ROM, a CD-ROM, and a semiconductor storage device (for example, an SSD), and a storage device such as a hard disk and a semiconductor storage device built in a computer system. The aforementioned program may be transmitted via a telecommunication line.

The radio station 60c includes the information acquisition unit 61. The information acquisition unit 61 acquires the priority information for each traffic flow exchanged between the wireless terminal 80 and the core node 30c. The information acquisition unit 61 notifies the base station controller 85 of the acquired priority information.

In the signal transfer system 200c according to the eighth embodiment, the information acquisition unit 61 is included in the control unit of the radio station 60c.

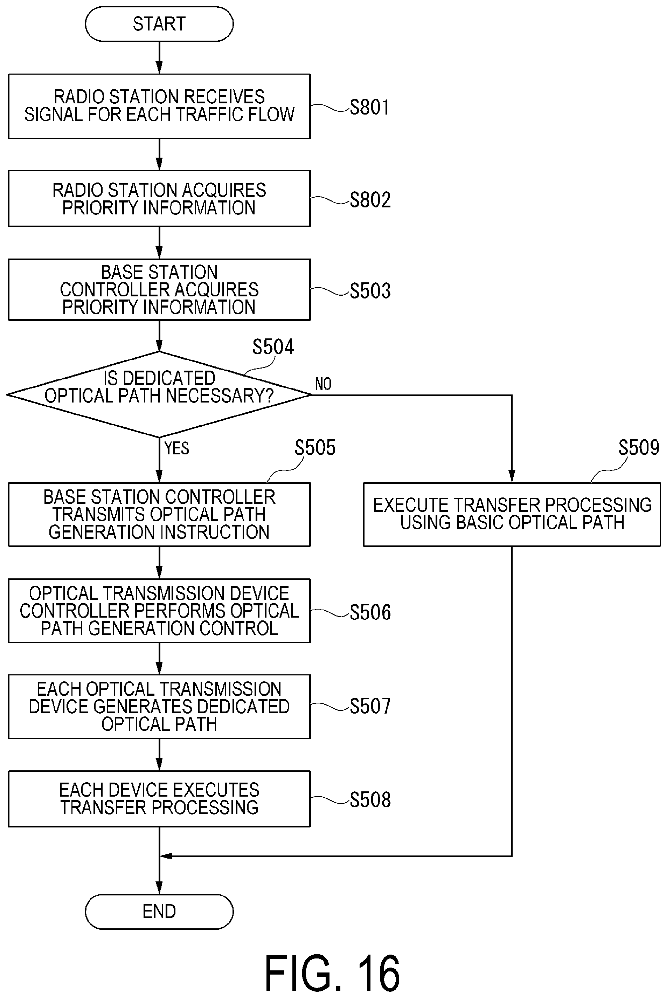

Fig. 16 is a flowchart illustrating an example of a flow of processing executed by the signal transfer system 200c according to the eighth embodiment. In the signal transfer system 200c, the processing illustrated in Fig. 16 is repeatedly performed. Note that it is assumed that a basic optical path is generated in a wired section from the server 10 to the radio station 60c at the start of the processing in Fig. 16. In Fig. 16, the same processing as that in Fig. 10 is denoted by the same reference numeral as that in Fig. 10, and description thereof will be omitted.

The radio station 60c receives a signal for each traffic flow at the start of communication of the wireless terminal 80 (step S801). The information acquisition unit 61 included in the radio station 60c acquires the priority information for each traffic flow on the basis of the received signal (step S802). The information acquisition unit 61 transmits the acquired priority information to the base station controller 85. Thereafter, the processing from steps S503 to S509 is executed. Note that it is sufficient if the core node 30 and the radio station 60 in the processing from steps S503 to S509 are replaced with the core node 30c and the radio station 60c.

With the signal transfer system 200c configured as described above, the radio station 60c notifies the base station controller 85 of the priority information for each traffic flow. As a result, the signal transfer system 200c can obtain the same effects as that of the fifth embodiment.

### (Modification of Eighth Embodiment)

The signal transfer system 200c is not necessarily applied to the mobile communication system, and may be applied to a wireless communication system other than the mobile communication system. In this case, the signal transfer system 200c does not include, for example, the central station 40 or the distributed station 50, and it is sufficient if the radio station 60c is regarded as a Wi-Fi (registered trademark) access point and the core node 30c is regarded as a Wi-Fi controller.

In the first to eighth embodiments described above, the configuration in which the dedicated optical path is allocated only to the specific traffic flow having strict requirement conditions on the basis of the priority information indicating the priority of each traffic flow of the wireless terminal 80 has been described. In the following embodiments, a configuration for generating a dedicated optical path on the basis of identifier information regarding each traffic flow of a wireless terminal 80 will be described.

One of the identifier of a traffic flow, the identifier of a wireless terminal 80, or a slice ID is used as the identifier information regarding each traffic flow of the wireless terminal 80. In the following embodiments, a different dedicated optical path may be generated for each traffic flow based on the identifier of the traffic flow, a different dedicated optical path may be generated for each wireless terminal 80 based on the identifier of the wireless terminal 80, or a different dedicated optical path may be generated for each slice based on the slice ID. Details will be described below.

### (Ninth Embodiment)

In a ninth embodiment, a configuration in which a core node notifies an orchestrator of identifier information will be described.

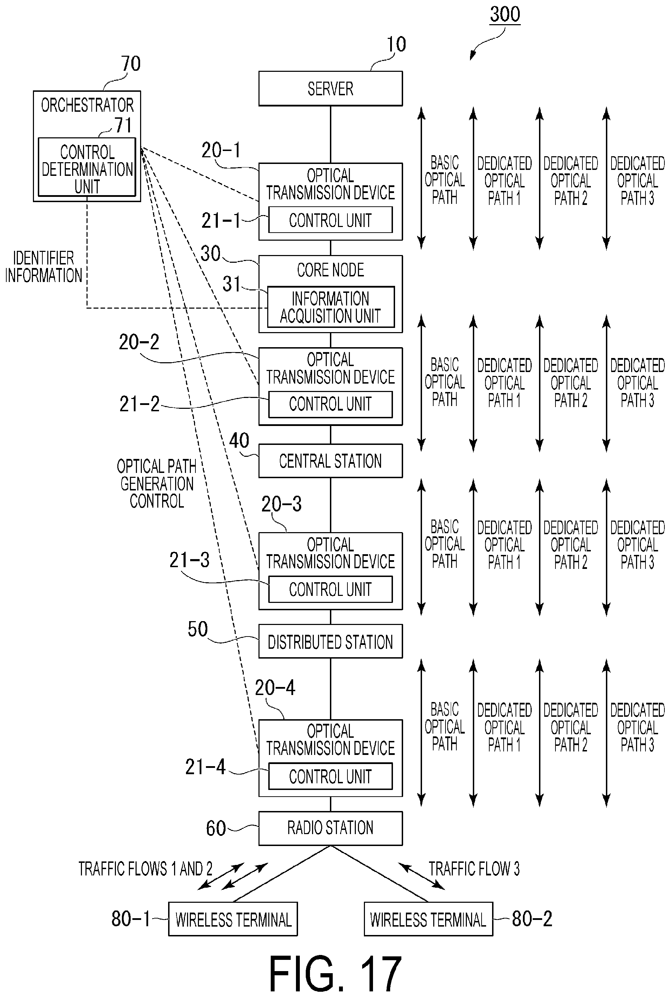

Fig. 17 is a diagram illustrating a configuration example of a signal transfer system 300 according to the ninth embodiment. The signal transfer system 300 is a system that transfers a signal from one communication device to another communication device. The signal transfer system 300 includes, for example, a server 10, a plurality of optical transmission devices 20-1 to 20-4, a core node 30, a central station 40, a distributed station 50, a radio station 60, and an orchestrator 70. Fig. 17 illustrates a configuration in which the signal transfer system 300 includes four optical transmission devices 20, but the number of the optical transmission devices 20 is not limited as long as the number is plural.

The devices included in the signal transfer system 300 and the connection relationship between the devices are basically the same as those of the signal transfer system 100 according to the first embodiment. The signal transfer system 300 is different from the signal transfer system 100 according to the first embodiment in information acquired by the core node 30 and processing performed by the orchestrator 70. Hereinafter, differences from the signal transfer system 100 will be mainly described.

The optical transmission devices 20-1 to 20-4 perform dedicated optical path generation processing in response to an instruction from the orchestrator 70. The optical transmission devices 20-1 to 20-4 according to the ninth embodiment generate one or more dedicated optical paths on the basis of identifier information regarding each traffic flow of the wireless terminal 80.

In the example illustrated in Fig. 17, the optical transmission device 20-1 generates a basic optical path and a dedicated optical path between the server 10 and the core node 30, the optical transmission device 20-2 generates a basic optical path and a dedicated optical path between the core node 30 and the central station 40, the optical transmission device 20-3 generates a basic optical path and a dedicated optical path between the central station 40 and the distributed station 50, and the optical transmission device 20-4 generates a basic optical path and a dedicated optical path between the distributed station 50 and the radio station 60.

The core node 30 is a base station that is provided between the optical transmission device 20-1 and the optical transmission device 20-2 and relays signals exchanged between the server 10 and the wireless terminal 80. In the ninth embodiment, the core node 30 determines an identifier for each traffic flow between each wireless terminal 80 and the core node 30 at the start of communication of each wireless terminal 80. The interaction for determining the identifier for each traffic flow is, for example, PDU session establishment (see, for example, Non Patent Literatures 1 and 2) in the mobile communication system. Note that communication related to this interaction may be performed using, for example, an originally generated basic optical path. At this time, the core node 30 extracts identifier information indicating the identifier for each traffic flow of each wireless terminal 80, and transmits the extracted identifier information to the orchestrator 70.

The identifier information is, for example, a QFI representing the identifier of a traffic flow. Note that the identifier information may be not a QFI indicating the identifier of the traffic flow but may be 5G Global Unique Temporary Identifier (5G-GUTI) that is an identifier of the wireless terminal 80, NSSAI that is a slice ID determined for each PDU Session ID, or the like (see, for example, Non Patent Literatures 3 and 4). As described above, in the ninth embodiment, the core node 30 acquires the identifier information for each traffic flow of each wireless terminal 80.

Note that the core node 30 may generate a dedicated radio frequency resource for each traffic flow in a radio section between the wireless terminal 80 and the radio station 60 at the start of communication. This can be implemented by a method of allocating the slice ID for each wireless terminal 80 and then setting the upper limit and the lower limit of the frequency resource amount for each slice (see, e.g., Reference Literature 1).

### (Reference Literature 1: "Technical White Paper, Network Slicing", Samsung, 2020)

The orchestrator 70 controls each device (for example, the optical transmission devices 20-1 to 20-4, the core node 30, the central station 40, the distributed station 50, and the radio station 60) provided between the server 10 and each wireless terminal 80. The orchestrator 70 acquires, for example, identifier information for each traffic from the core node 30. The orchestrator 70 causes each of the optical transmission devices 20-1 to 20-4 to generate a dedicated optical path for the traffic flow of each wireless terminal 80 on the basis of the acquired identifier information for each traffic flow. That is, the orchestrator 70 instructs each of the optical transmission devices 20-1 to 20-4 to generate the dedicated optical path. For example, the orchestrator 70 simultaneously performs optical path generation control with respect to each of the optical transmission devices 20-1 to 20-4.

For example, the orchestrator 70 causes a dedicated optical path to be generated for each traffic flow on the basis of the acquired identifier information for each traffic flow. In the example illustrated in Fig. 17, a wireless terminal 80-1 has traffic flows 1 and 2, and a wireless terminal 80-2 has a traffic flow 3. In this case, the orchestrator 70 causes each of the optical transmission devices 20-1 to 20-4 to generate a dedicated optical path 1 corresponding to the traffic flow 1, a dedicated optical path 2 corresponding to the traffic flow 2, and a dedicated optical path 3 corresponding to the traffic flow 3.

In the above description, the configuration in which the orchestrator 70 causes dedicated optical paths corresponding to all the traffic flows to be generated has been described, but the dedicated optical path may not be generated for some traffic flows.

Note that the orchestrator 70 may cause a dedicated optical path to be generated not for each traffic flow but for each wireless terminal or for each slice, for example. Also in this case, the orchestrator 70 may not cause a dedicated optical path to be generated for some wireless terminals 80 or some slices.

Each of the optical transmission devices 20-1 to 20-4, the core node 30, the central station 40, the distributed station 50, the radio station 60, and the orchestrator 70 included in the signal transfer system 300 are configured using, for example, a processor such as a CPU, a memory, and a communication interface. Each device of each of the optical transmission devices 20-1 to 20-4, the core node 30, the central station 40, the distributed station 50, the radio station 60, and the orchestrator 70 functions as a communication device including a control unit when the processor executes a program.

The control unit provides each function for causing the communication device to function as each of the optical transmission devices 20-1 to 20-4, the core node 30, the central station 40, the distributed station 50, the radio station 60, or the orchestrator 70. Note that all or some of the functions of the control unit may be implemented by using hardware such as an ASIC, a PLD, or an FPGA.

The aforementioned program may be recorded in a computer-readable recording medium. Examples of the computer-readable recording medium include a portable medium such as a flexible disk, a magneto-optical disc, ROM, a CD-ROM, and a semiconductor storage device (for example, an SSD), and a storage device such as a hard disk and a semiconductor storage device built in a computer system. The aforementioned program may be transmitted via a telecommunication line.

Next, a specific configuration of each device will be described. The core node 30 includes an information acquisition unit 31. The information acquisition unit 31 acquires the identifier information for each traffic flow exchanged between the wireless terminal 80 and the core node 30. Note that, in the following description, a case where the information acquisition unit 31 acquires the identifier information for each traffic flow from the wireless terminal 80 toward the core node 30 will be described as an example. The information acquisition unit 31 notifies the orchestrator 70 of the acquired identifier information.

The optical transmission devices 20-1 to 20-4 include control units 21-1 to 21-4. The control units 21-1 to 21-4 generate the basic optical paths in predetermined sections. Further, the control units 21-1 to 21-4 generate the one or more dedicated optical paths in predetermined sections according to the optical path generation control of the orchestrator 70.

The control unit 21-1 included in the optical transmission device 20-1 generates, for example, the one or more dedicated optical paths in a section between the server 10 and the core node 30. The control unit 21-2 included in the optical transmission device 20-2 generates, for example, the one or more dedicated optical paths in a section between the core node 30 and the central station 40. The control unit 21-3 included in the optical transmission device 20-3 generates, for example, the one or more dedicated optical paths in a section between the central station 40 and the distributed station 50. The control unit 21-4 included in the optical transmission device 20-4 generates, for example, the one or more dedicated optical paths in a section between the distributed station 50 and the radio station 60.

Further, when the optical signal is input after the generation of the dedicated optical path, the control units 21-1 to 21-4 determine an output destination of the input optical signal according to an optical path identifier of each dedicated optical path notification of which is provided from the orchestrator 70. For example, the control units 21-1 to 21-4 determine to which of the basic optical path or the one or more dedicated optical paths the input optical signal is output.

When the input optical signal matches the optical path identifier notification of which is provided from the orchestrator 70, the control units 21-1 to 21-4 output the input optical signal to the dedicated optical path with the matched optical path identifier. When the input optical signal does not match any optical path identifier notification of which is provided from the orchestrator 70, the control units 21-1 to 21-4 output the input optical signal to the basic optical path.

Note that, in a case where a network is not configured by the optical transmission devices 20-1 to 20-4 in some of the sections and a low delay is guaranteed by another means, for example, priority control in conventional packet transmission or the like, the optical transmission devices 20-1 to 20-4 may not generate the dedicated optical paths in the sections but may generate the dedicated optical paths only in the other sections. The dedicated optical path may be deleted when the session of the traffic flow disappears, or may be left even when the session disappears, and may be used again when another traffic flow requires the dedicated optical path.

The orchestrator 70 includes a control determination unit 71. The control determination unit 71 causes each of the optical transmission devices 20-1 to 20-4 to generate a dedicated optical path for the traffic flow of each wireless terminal 80 on the basis of the identifier information received from the core node 30. That is, the control determination unit 71 performs the optical path generation control of the dedicated optical path with respect to the optical transmission devices 20-1 to 20-4.

When performing the optical path generation control, the control determination unit 71 notifies the optical transmission devices 20-1 to 20-4 of the optical path identifier of each dedicated optical path. For example, when the number of dedicated optical paths to be generated is three, the control determination unit 71 notifies the optical transmission devices 20-1 to 20-4 of the optical path identifiers of the three dedicated optical paths. Further, the control determination unit 71 notifies the optical transmission devices 20-1 to 20-4 of the optical path identifier of each dedicated optical path and also with respect to the device (for example, the server 10, the core node 30, the central station 40, the distributed station 50, and the radio station 60) connected to the optical transmission devices 20. Note that there may be a plurality of paths for generating the dedicated optical path.

The device (for example, the server 10, the core node 30, the central station 40, the distributed station 50, and the radio station 60) connected to the optical transmission devices 20 determines an output destination of the input optical signal according to an optical path identifier notification of which is provided from the orchestrator 70. The method of determining the output destination is similar to the method performed by the control units 21-1 to 21-4.

In the signal transfer system 300 according to the ninth embodiment, the control determination unit 71 is included in the control unit of the orchestrator 70, and the information acquisition unit 31 is included in the control unit of the core node 30.

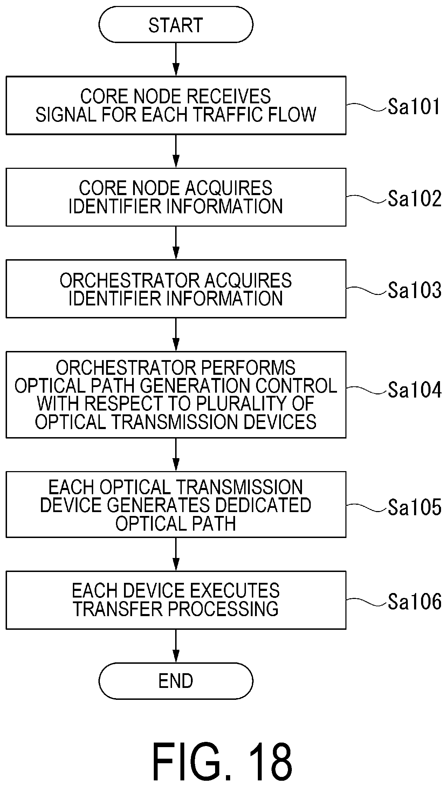

Fig. 18 is a flowchart illustrating an example of a flow of processing executed by the signal transfer system 300 according to the ninth embodiment. In the signal transfer system 300, the processing illustrated in Fig. 18 is repeatedly performed. Note that it is assumed that a basic optical path is generated in a wired section from the server 10 to the radio station 60 at the start of the processing in Fig. 18.

The core node 30 receives a signal for each traffic flow at the start of communication of the wireless terminal 80 (step Sa101). The information acquisition unit 31 included in the core node 30 acquires the identifier information for each traffic flow on the basis of the received signal (step Sa102). The information acquisition unit 31 transmits the acquired identifier information to the orchestrator 70.

The control determination unit 71 included in the orchestrator 70 acquires the identifier information transmitted from the information acquisition unit 31 (step Sa103). The control determination unit 71 determines generation of the dedicated optical path on the basis of the acquired identifier information. When the identifier information is an identifier of a traffic flow, the control determination unit 71 determines, each time the identifier information is obtained, generation of a dedicated optical path corresponding to the traffic flow identified by the identifier of the traffic flow. In this manner, the control determination unit 71 determines generation of a dedicated optical path for each traffic flow.

When the identifier information is the identifier of the wireless terminal 80, the control determination unit 71 determines generation of the dedicated optical path corresponding to the wireless terminal 80 identified by the identifier of the wireless terminal 80 each time the identifier of the wireless terminal 80 for which the dedicated optical path has not been generated is obtained. In this manner, the control determination unit 71 may determine generation of a dedicated optical path for each wireless terminal 80.

When the identifier information is the slice ID, the control determination unit 71 determines generation of the dedicated optical path corresponding to the slice ID each time the slice ID is obtained. In this manner, the control determination unit 71 may determine generation of a dedicated optical path for each slice ID.

Then, the control determination unit 71 performs the optical path generation control with respect to the optical transmission devices 20-1 to 20-4 (step Sa104). At this time, the control determination unit 71 notifies the optical transmission devices 20 and the device (for example, the server 10, the core node 30, the central station 40, the distributed station 50, and the radio station 60) connected to the optical transmission devices 20 of the optical path identifier of each dedicated optical path.

The control units 21-1 to 21-4 of the optical transmission devices 20-1 to 20-4 generate the dedicated optical paths in predetermined sections according to the optical path generation control of the orchestrator 70 (step Sa105). Thereafter, each device provided between the server 10 and the wireless terminal 80 performs input signal transfer processing (step Sa106). Specifically, the radio station 60 converts the signal transmitted from the wireless terminal 80 into an optical signal and outputs the optical signal to the optical transmission device 20-4. At this time, the radio station 60 determines to which of the basic optical path or the one or more dedicated optical paths the optical signal is output on the basis of the optical signal and the optical path identifier of each dedicated optical path notification of which is provided from the orchestrator 70. In a case of determining to output the optical signal to the basic optical path, the radio station 60 outputs the optical signal to the basic optical path. Meanwhile, in a case of determining to output the optical signal to the dedicated optical path, the radio station 60 outputs the optical signal to the dedicated optical path with the matched optical path identifier.

The optical transmission device 20-4 receives the optical signal output from the radio station 60 via the optical path, which is either the basic optical path or the one or more dedicated optical paths. The control unit 21-4 of the optical transmission device 20-4 determines to which of the basic optical path or the one or more dedicated optical paths the received optical signal is output on the basis of the received optical signal and the optical path identifier of each dedicated optical path notification of which is provided from the orchestrator 70. In a case of determining to output the optical signal to the basic optical path, the control unit 21-4 outputs the optical signal to the basic optical path. Meanwhile, in a case of determining to output the optical signal to the dedicated optical path, the control unit 21-4 outputs the optical signal to the dedicated optical path with the matched optical path identifier.

The distributed station 50 receives the optical signal output from the optical transmission device 20-4 via the optical path, which is either the basic optical path or the one or more dedicated optical paths. The distributed station 50 determines to which of the basic optical path or the one or more dedicated optical paths the received optical signal is output on the basis of the received optical signal and the optical path identifier of each dedicated optical path notification of which is provided from the orchestrator 70. In a case of determining to output the optical signal to the basic optical path, the distributed station 50 outputs the optical signal to the basic optical path. Meanwhile, in a case of determining to output the optical signal to the dedicated optical path, the distributed station 50 outputs the optical signal to the dedicated optical path with the matched optical path identifier.

The optical transmission device 20-3 receives the optical signal output from the distributed station 50 via the optical path, which is either the basic optical path or the one or more dedicated optical paths. The control unit 21-3 of the optical transmission device 20-3 determines to which of the basic optical path or the one or more dedicated optical paths the received optical signal is output on the basis of the received optical signal and the optical path identifier of each dedicated optical path notification of which is provided from the orchestrator 70. In a case of determining to output the optical signal to the basic optical path, the control unit 21-3 outputs the optical signal to the basic optical path. Meanwhile, in a case of determining to output the optical signal to the dedicated optical path, the control unit 21-3 outputs the optical signal to the dedicated optical path with the matched optical path identifier.

The central station 40 receives the optical signal output from the optical transmission device 20-3 via the optical path, which is either the basic optical path or the one or more dedicated optical paths. The central station 40 determines to which of the basic optical path or the one or more dedicated optical paths the received optical signal is output on the basis of the received optical signal and the optical path identifier of each dedicated optical path notification of which is provided from the orchestrator 70. In a case of determining to output the optical signal to the basic optical path, the central station 40 outputs the optical signal to the basic optical path. Meanwhile, in a case of determining to output the optical signal to the dedicated optical path, the central station 40 outputs the optical signal to the dedicated optical path with the matched optical path identifier.

The optical transmission device 20-2 receives the optical signal output from the central station 40 via the optical path, which is either the basic optical path or the one or more dedicated optical paths. The control unit 21-2 of the optical transmission device 20-2 determines to which of the basic optical path or the one or more dedicated optical paths the received optical signal is output on the basis of the received optical signal and the optical path identifier of each dedicated optical path notification of which is provided from the orchestrator 70. In a case of determining to output the optical signal to the basic optical path, the control unit 21-2 outputs the optical signal to the basic optical path. Meanwhile, in a case of determining to output the optical signal to the dedicated optical path, the control unit 21-2 outputs the optical signal to the dedicated optical path with the matched optical path identifier.

The core node 30 receives the optical signal output from the optical transmission device 20-2 via the optical path, which is either the basic optical path or the one or more dedicated optical paths. The core node 30 determines to which of the basic optical path or the one or more dedicated optical paths the received optical signal is output on the basis of the received optical signal and the optical path identifier of each dedicated optical path notification of which is provided from the orchestrator 70. In a case of determining to output the optical signal to the basic optical path, the core node 30 outputs the optical signal to the basic optical path. Meanwhile, in a case of determining to output the optical signal to the dedicated optical path, the core node 30 outputs the optical signal to the dedicated optical path with the matched optical path identifier.

The optical transmission device 20-1 receives the optical signal output from the core node 30 via the optical path, which is either the basic optical path or the one or more dedicated optical paths. The control unit 21-1 of the optical transmission device 20-1 determines to which of the basic optical path or the one or more dedicated optical paths the received optical signal is output on the basis of the received optical signal and the optical path identifier of each dedicated optical path notification of which is provided from the orchestrator 70. In a case of determining to output the optical signal to the basic optical path, the control unit 21-1 outputs the optical signal to the basic optical path. Meanwhile, in a case of determining to output the optical signal to the dedicated optical path, the control unit 21-1 outputs the optical signal to the dedicated optical path with the matched optical path identifier.

The server 10 receives the optical signal output from the optical transmission device 20-1 via the optical path, which is either the basic optical path or the one or more dedicated optical paths. The server 10 performs signal processing on the received optical signal. The server 10 transmits a response to the optical signal to the wireless terminal 80 as necessary.

With the signal transfer system 300 configured as described above, the core node 30 notifies the orchestrator 70 of the identifier information for each traffic flow determined between the wireless terminal 80 and the core node 30 at the start of communication of the wireless terminal 80. The orchestrator 70 simultaneously instructs the optical transmission devices 20-1 to 20-4 to generate the one or more dedicated optical paths according to the identifier information on the basis of the identifier information for each traffic flow. Each of the optical transmission devices 20 generates the instructed number of dedicated optical paths in response to the instruction from the orchestrator 70, and transfers the traffic flow transmitted from the wireless terminal 80 to the server 10 via the generated dedicated optical paths.

With the above configuration, in the E2E communication of the wireless terminal 80 from the server 10, it is possible to eliminate the capacity shortage and the delay increase by generating the dedicated optical path for each traffic flow of the wireless terminal 80 as compared with the configuration in which a plurality of traffic flows is mixed with one optical path.

### (First Modification of Ninth Embodiment)

The signal transfer system 300 is not necessarily applied to a mobile communication system, and may be applied to a wireless communication system other than the mobile communication system. In this case, the signal transfer system 300 does not include, for example, the central station 40 or the distributed station 50, and it is sufficient if the radio station 60 is regarded as a Wi-Fi (registered trademark) access point and the core node 30 is regarded as a Wi-Fi controller.

### (Second Modification of Ninth Embodiment)

Either the central station 40 and the distributed station 50 or the distributed station 50 and the radio station 60 may be configured to be integrated into one device so that a section in which the optical transmission device is installed is reduced.

### (Tenth Embodiment)

In a tenth embodiment, a configuration in which a central station, not a core node, notifies an orchestrator of identifier information will be described.

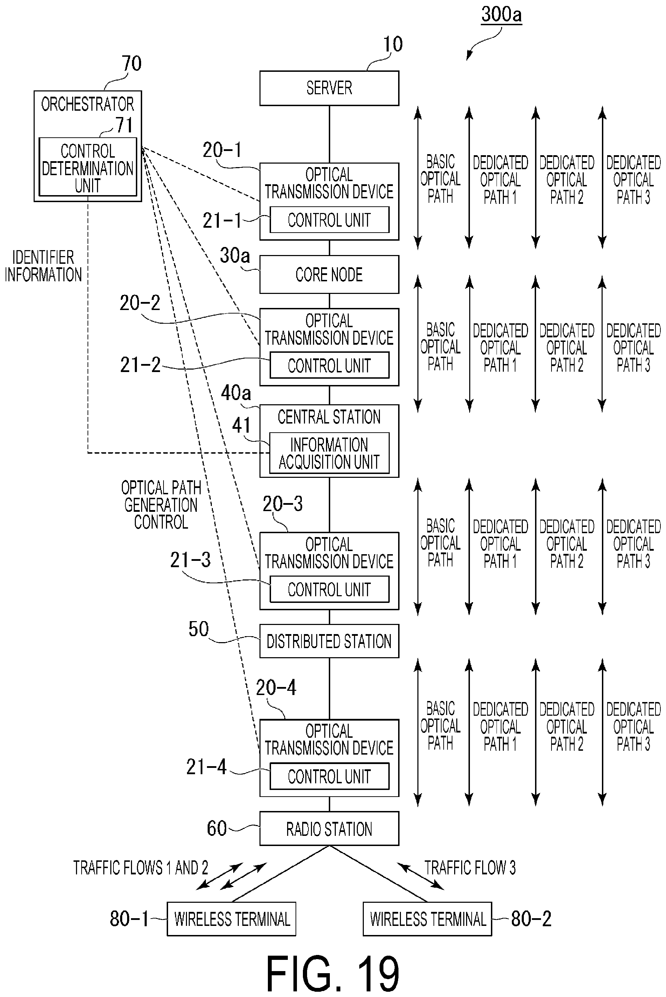

Fig. 19 is a diagram illustrating a configuration example of a signal transfer system 300a according to the tenth embodiment. The signal transfer system 300a is a system that transfers a signal from one communication device to another communication device. The signal transfer system 300a includes, for example, a server 10, a plurality of optical transmission devices 20-1 to 20-4, a core node 30a, a central station 40a, a distributed station 50, a radio station 60, and an orchestrator 70. Fig. 19 illustrates a configuration in which the signal transfer system 300a includes four optical transmission devices 20, but the number of the optical transmission devices 20 is not limited as long as the number is plural.

The signal transfer system 300a is basically similar to the signal transfer system 300 except that the core node 30a corresponding to the core node 30 does not include the information acquisition unit 31, and the central station 40a corresponding to the central station 40 includes an information acquisition unit 41, and the orchestrator 70 acquires the identifier information for each traffic flow from the information acquisition unit 41 of the central station 40a. Hereinafter, differences from the signal transfer system 300 will be mainly described.

The core node 30a and the central station 40a are configured using, for example, a processor such as a CPU, a memory, and a communication interface. Each device of the core node 30a and the central station 40a functions as a communication device including a control unit when the processor executes a program.

The control units included in the core node 30a and the central station 40a provide each function for causing the communication device to function as the core node 30a or the central station 40a. Note that all or some of the functions of the control unit may be implemented by using hardware such as an ASIC, a PLD, or an FPGA. The aforementioned program may be recorded in a computer-readable recording medium. Examples of the computer-readable recording medium include a portable medium such as a flexible disk, a magneto-optical disc, ROM, a CD-ROM, and a semiconductor storage device (for example, an SSD), and a storage device such as a hard disk and a semiconductor storage device built in a computer system. The aforementioned program may be transmitted via a telecommunication line.

The central station 40a includes the information acquisition unit 41. The information acquisition unit 41 acquires the identifier information for each traffic flow exchanged between the wireless terminal 80 and the core node 30a. The information acquisition unit 41 notifies the orchestrator 70 of the acquired identifier information.

In the signal transfer system 300a according to the tenth embodiment, the information acquisition unit 41 is included in the control unit of the central station 40a.

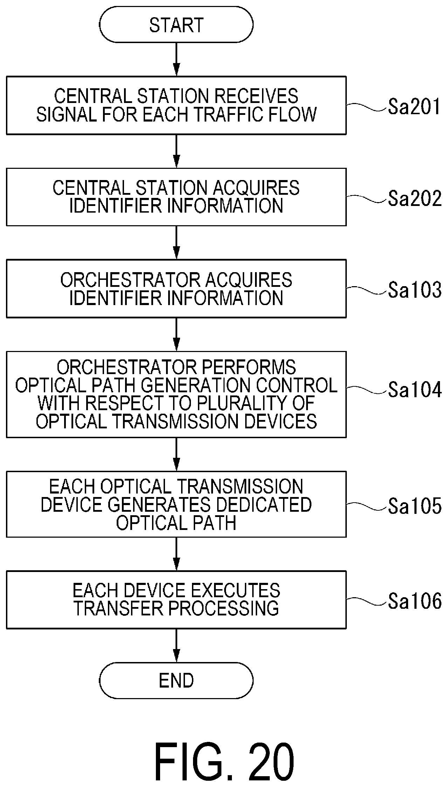

Fig. 20 is a flowchart illustrating an example of a flow of processing executed by the signal transfer system 300a according to the tenth embodiment. In the signal transfer system 300a, the processing illustrated in Fig. 20 is repeatedly performed. Note that it is assumed that a basic optical path is generated in a wired section from the server 10 to the radio station 60 at the start of the processing in Fig. 20. In Fig. 20, the same processing as that in Fig. 18 is denoted by the same reference numeral as that in Fig. 18, and description thereof will be omitted.

The central station 40a receives a signal for each traffic flow at the start of communication of the wireless terminal 80 (step Sa201). The information acquisition unit 41 included in the central station 40a acquires the identifier information for each traffic flow on the basis of the received signal (step Sa202). The information acquisition unit 41 transmits the acquired identifier information to the orchestrator 70. Thereafter, the processing from steps Sa103 to Sa108 is executed. Note that it is sufficient if the core node 30 and the central station 40 in the processing from steps Sa103 to Sa108 are replaced with the core node 30a and the central station 40a.

With the signal transfer system 300a configured as described above, the central station 40a notifies the orchestrator 70 of the identifier information for each traffic flow. As a result, the signal transfer system 300a can obtain the same effects as that of the ninth embodiment.

### (Modification of Tenth Embodiment)

The distributed station 50 and the radio station 60 may be configured to be integrated into one device so that a section in which the optical transmission device is installed is reduced.

### (Eleventh Embodiment)

In an eleventh embodiment, a configuration in which a distributed station, not a core node, notifies an orchestrator of identifier information will be described.

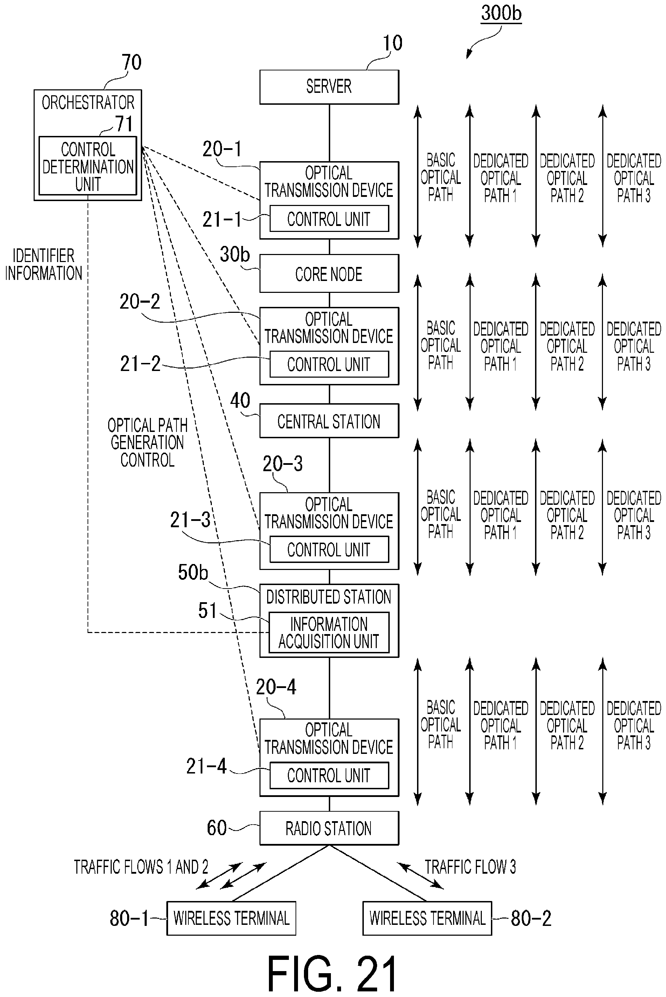

Fig. 21 is a diagram illustrating a configuration example of a signal transfer system 300b according to the eleventh embodiment. The signal transfer system 300b is a system that transfers a signal from one communication device to another communication device. The signal transfer system 300b includes, for example, a server 10, a plurality of optical transmission devices 20-1 to 20-4, a core node 30b, a central station 40, a distributed station 50b, a radio station 60, and an orchestrator 70. Fig. 21 illustrates a configuration in which the signal transfer system 300b includes four optical transmission devices 20, but the number of the optical transmission devices 20 is not limited as long as the number is plural.

The signal transfer system 300b is basically similar to the signal transfer system 300 except that the core node 30b corresponding to the core node 30 does not include the information acquisition unit 31, and the distributed station 50b corresponding to the distributed station 50 includes an information acquisition unit 51, and the orchestrator 70 acquires the identifier information for each traffic flow from the information acquisition unit 51 of the distributed station 50b. Hereinafter, differences from the signal transfer system 300 will be mainly described.

The core node 30b and the distributed station 50b are configured using, for example, a processor such as a CPU, a memory, and a communication interface. Each device of the core node 30b and the distributed station 50b functions as a communication device including a control unit when the processor executes a program.

The control units included in the core node 30b and the distributed station 50b provide each function for causing the communication device to function as the core node 30b or the distributed station 50b. Note that all or some of the functions of the control unit may be implemented by using hardware such as an ASIC, a PLD, or an FPGA. The aforementioned program may be recorded in a computer-readable recording medium. Examples of the computer-readable recording medium include a portable medium such as a flexible disk, a magneto-optical disc, ROM, a CD-ROM, and a semiconductor storage device (for example, an SSD), and a storage device such as a hard disk and a semiconductor storage device built in a computer system. The aforementioned program may be transmitted via a telecommunication line.

The distributed station 50b includes the information acquisition unit 51. The information acquisition unit 51 acquires the identifier information for each traffic flow exchanged between the wireless terminal 80 and the core node 30b. The information acquisition unit 51 notifies the orchestrator 70 of the acquired identifier information.

In the signal transfer system 300b according to the eleventh embodiment, the information acquisition unit 51 is included in the control unit of the distributed station 50b.

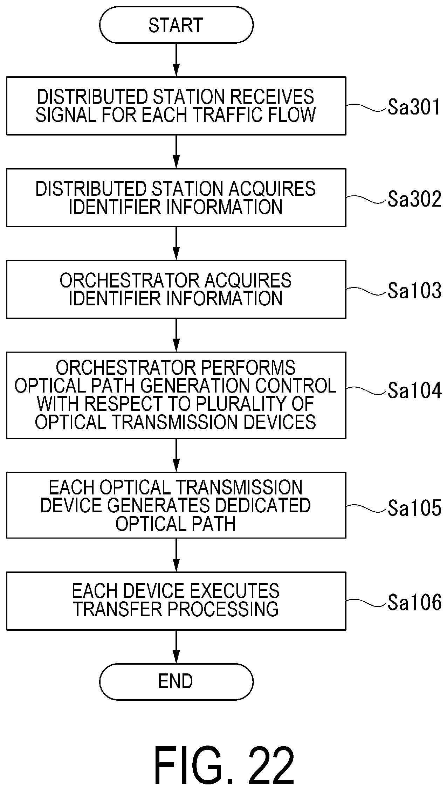

Fig. 22 is a flowchart illustrating an example of a flow of processing executed by the signal transfer system 300b according to the eleventh embodiment. In the signal transfer system 300b, the processing illustrated in Fig. 22 is repeatedly performed. Note that it is assumed that a basic optical path is generated in a wired section from the server 10 to the radio station 60 at the start of the processing in Fig. 22. In Fig. 22, the same processing as that in Fig. 18 is denoted by the same reference numeral as that in Fig. 18, and description thereof will be omitted.

The distributed station 50b receives a signal for each traffic flow at the start of communication of the wireless terminal 80 (step Sa301). The information acquisition unit 51 included in the distributed station 50b acquires the identifier information for each traffic flow on the basis of the received signal (step Sa302). The information acquisition unit 51 transmits the acquired identifier information to the orchestrator 70. Thereafter, the processing from steps Sa103 to Sa108 is executed. Note that it is sufficient if the core node 30 and the distributed station 50 in the processing from steps Sa103 to Sa108 are replaced with the core node 30b and the distributed station 50b.

With the signal transfer system 300b configured as described above, the distributed station 50b notifies the orchestrator 70 of the identifier information for each traffic flow. As a result, the signal transfer system 300b can obtain the same effects as that of the ninth embodiment.

### (Twelfth Embodiment)

In a twelfth embodiment, a configuration in which a radio station, not a core node, notifies an orchestrator of identifier information will be described.

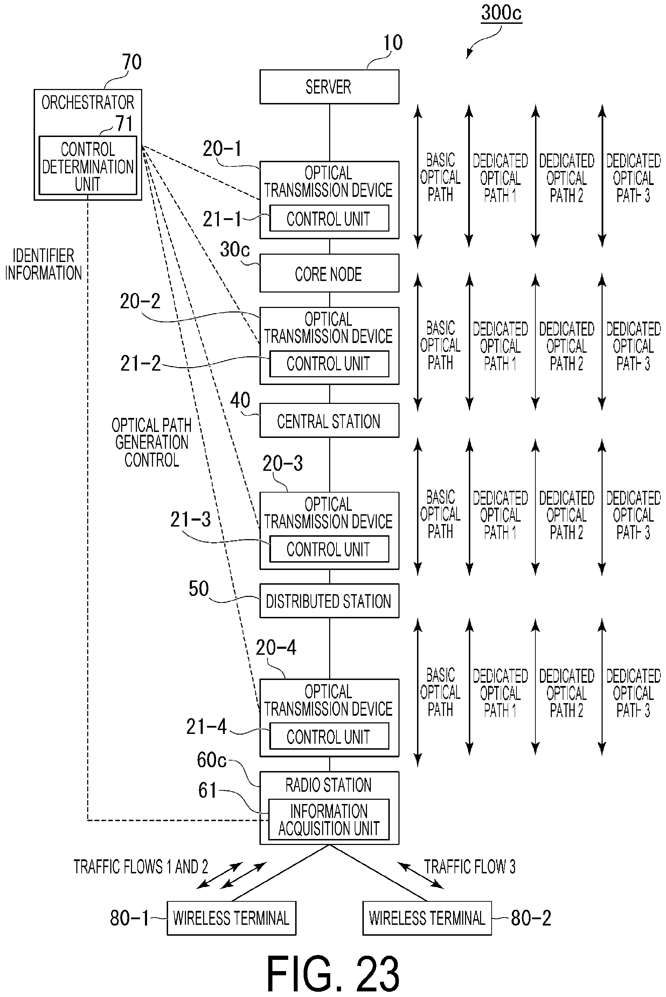

Fig. 23 is a diagram illustrating a configuration example of a signal transfer system 300c according to the twelfth embodiment. The signal transfer system 300c is a system that transfers a signal from one communication device to another communication device. The signal transfer system 300c includes, for example, a server 10, a plurality of optical transmission devices 20-1 to 20-4, a core node 30c, a central station 40, a distributed station 50, a radio station 60c, and an orchestrator 70. Fig. 23 illustrates a configuration in which the signal transfer system 300c includes four optical transmission devices 20, but the number of the optical transmission devices 20 is not limited as long as the number is plural.

The signal transfer system 300c is basically similar to the signal transfer system 300 except that the core node 30c corresponding to the core node 30 does not include the information acquisition unit 31, and the radio station 60c corresponding to the radio station 60 includes an information acquisition unit 61, and the orchestrator 70 acquires the identifier information for each traffic flow from the information acquisition unit 61 of the radio station 60c. Hereinafter, differences from the signal transfer system 300 will be mainly described.

The core node 30c and the radio station 60c are configured using, for example, a processor such as a CPU, a memory, and a communication interface. Each device of the core node 30c and the radio station 60c functions as a communication device including a control unit when the processor executes a program.

The control units included in the core node 30c and the radio station 60c provide each function for causing the communication device to function as the core node 30c or the radio station 60c. Note that all or some of the functions of the control unit may be implemented by using hardware such as an ASIC, a PLD, or an FPGA. The aforementioned program may be recorded in a computer-readable recording medium. Examples of the computer-readable recording medium include a portable medium such as a flexible disk, a magneto-optical disc, ROM, a CD-ROM, and a semiconductor storage device (for example, an SSD), and a storage device such as a hard disk and a semiconductor storage device built in a computer system. The aforementioned program may be transmitted via a telecommunication line.

The radio station 60c includes the information acquisition unit 61. The information acquisition unit 61 acquires the identifier information for each traffic flow exchanged between the wireless terminal 80 and the core node 30c. The information acquisition unit 61 notifies the orchestrator 70 of the acquired identifier information.

In the signal transfer system 300c according to the twelfth embodiment, the information acquisition unit 61 is included in the control unit of the radio station 60c.

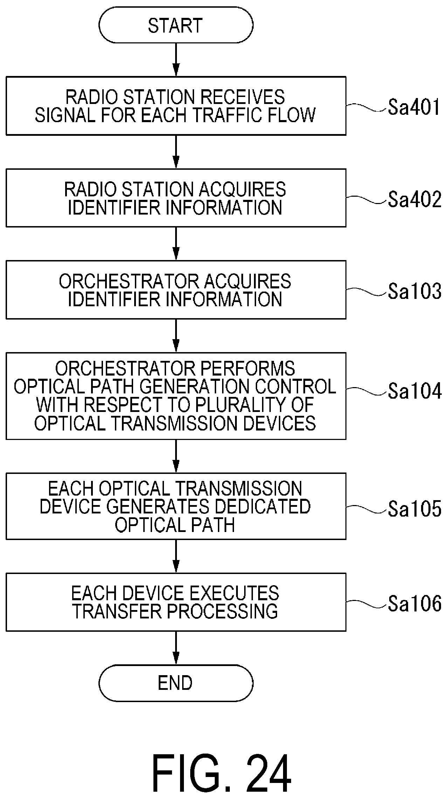

Fig. 24 is a flowchart illustrating an example of a flow of processing executed by the signal transfer system 300c according to the twelfth embodiment. In the signal transfer system 300c, the processing illustrated in Fig. 24 is repeatedly performed. Note that it is assumed that a basic optical path is generated in a wired section from the server 10 to the radio station 60c at the start of the processing in Fig. 24. In Fig. 24, the same processing as that in Fig. 18 is denoted by the same reference numeral as that in Fig. 18, and description thereof will be omitted.

The radio station 60c receives a signal for each traffic flow at the start of communication of the wireless terminal 80 (step Sa401). The information acquisition unit 61 included in the radio station 60c acquires the identifier information for each traffic flow on the basis of the received signal (step Sa402). The information acquisition unit 61 transmits the acquired identifier information to the orchestrator 70. Thereafter, the processing from steps Sa103 to Sa108 is executed. Note that it is sufficient if the core node 30 and the radio station 60 in the processing from steps Sa103 to Sa108 are replaced with the core node 30c and the radio station 60c.

With the signal transfer system 300c configured as described above, the radio station 60c notifies the orchestrator 70 of the identifier information for each traffic flow. As a result, the signal transfer system 300c can obtain the same effects as that of the ninth embodiment.

### (First Modification of Twelfth Embodiment)

The signal transfer system 300c is not necessarily applied to the mobile communication system, and may be applied to a wireless communication system other than the mobile communication system. In this case, the signal transfer system 300c does not include, for example, the central station 40 or the distributed station 50, and it is sufficient if the radio station 60c is regarded as a Wi-Fi (registered trademark) access point and the core node 30c is regarded as a Wi-Fi controller.

### (Second Modification of Twelfth Embodiment)

The central station 40 and the distributed station 50 may be configured to be integrated into one device so that a section in which the optical transmission device is installed is reduced.

### (Thirteenth Embodiment)

In a thirteenth embodiment, a configuration in which a core node includes an information acquisition unit, an orchestrator is divided into a base station controller and an optical transmission device controller, and the two controllers perform control in cooperation will be described.

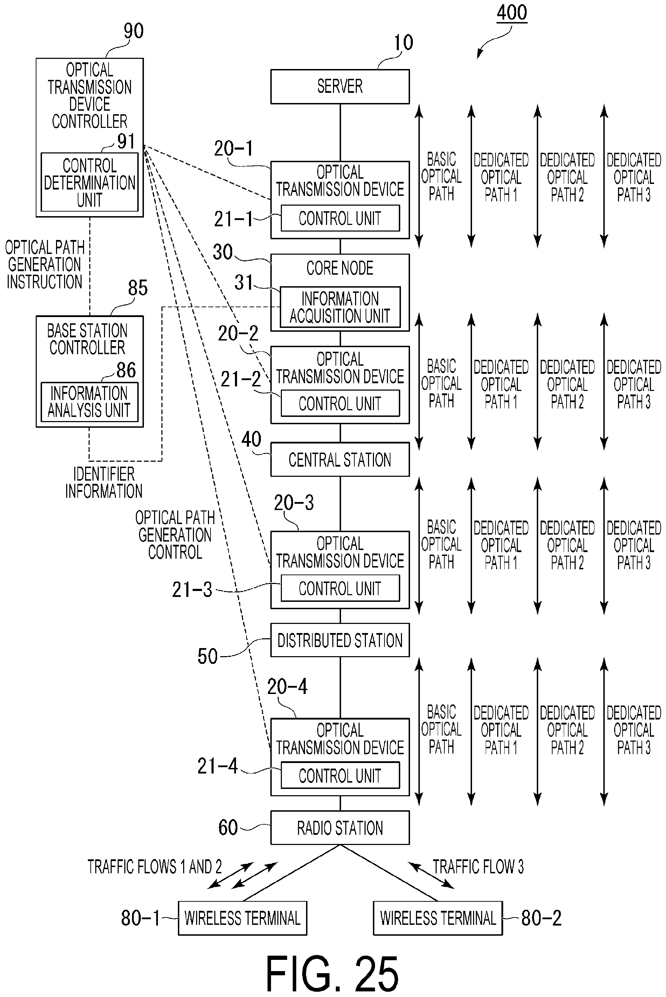

Fig. 25 is a diagram illustrating a configuration example of a signal transfer system 400 according to the thirteenth embodiment. The signal transfer system 400 is a system that transfers a signal from one communication device to another communication device. The signal transfer system 400 includes, for example, a server 10, a plurality of optical transmission devices 20-1 to 20-4, a core node 30, a central station 40, a distributed station 50, a radio station 60, a base station controller 85, and an optical transmission device controller 90. Fig. 25 illustrates a configuration in which the signal transfer system 400 includes four optical transmission devices 20, but the number of the optical transmission devices 20 is not limited as long as the number is plural.

The signal transfer system 400 is basically similar to the signal transfer system 100 except that the orchestrator 70 is not provided and the base station controller 85 and the optical transmission device controller 90 are provided. Hereinafter, differences from the signal transfer system 100 will be mainly described.

The base station controller 85 acquires identifier information for each traffic from the core node 30. The base station controller 85 determines whether or not generation of a dedicated optical path is necessary for each traffic flow included in the wireless terminal 80 on the basis of the acquired identifier information for each traffic. In a case of determining that the dedicated optical path is necessary, the base station controller 85 instructs the optical transmission device controller 90 to generate the dedicated optical path.

For example, when the identifier information is the identifier of the traffic flow, because a different identifier is allocated for each traffic flow, the base station controller 85 determines that a dedicated optical path is necessary. This is the case where the identifier information is the identifier of a traffic flow.

However, in a case where the identifier information is the identifier of the wireless terminal 80, it is also assumed that a dedicated optical path corresponding to the identifier of the same wireless terminal 80 has already been generated. Therefore, when the dedicated optical path corresponding to the identifier of the same wireless terminal 80 has already been generated on the basis of the identifier information for each traffic, the base station controller 85 determines that it is not necessary to generate the dedicated optical path corresponding to the identifier of the same wireless terminal 80. On the other hand, when the dedicated optical path corresponding to the identifier of the same wireless terminal 80 is not generated on the basis of the identifier information for each traffic, the base station controller 85 determines that it is necessary to generate the dedicated optical path corresponding to the identifier of the same wireless terminal 80. The same applies to a case where the identifier information is the slice ID.

The optical transmission device controller 90 controls each device (for example, the optical transmission devices 20-1 to 20-4, the core node 30, the central station 40, the distributed station 50, and the radio station 60) provided between the server 10 and the wireless terminal 80. The optical transmission device controller 90 simultaneously performs optical path generation control on each of the optical transmission devices 20-1 to 20-4 in response to the dedicated optical path generation instruction from the base station controller 85.

For example, the optical transmission device controller 90 causes the dedicated optical path to be generated for each traffic flow in response to the dedicated optical path generation instruction from the base station controller 85. In the example illustrated in Fig. 25, a wireless terminal 80-1 has traffic flows 1 and 2, and a wireless terminal 80-2 has a traffic flow 3. In this case, the optical transmission device controller 90 causes each of the optical transmission devices 20-1 to 20-4 to generate a dedicated optical path 1 corresponding to the traffic flow 1, a dedicated optical path 2 corresponding to the traffic flow 2, and a dedicated optical path 3 corresponding to the traffic flow 3.

As described above, in the thirteenth embodiment, since the optical transmission device controller 90 simultaneously performs the optical path generation control on each of the optical transmission devices 20-1 to 20-4, each of the optical transmission devices 20-1 to 20-4 performs the dedicated optical path generation processing in response to the instruction from the optical transmission device controller 90.

Each of the optical transmission devices 20-1 to 20-4, the core node 30, the central station 40, the distributed station 50, the radio station 60, the base station controller 85, and the optical transmission device controller 90 included in the signal transfer system 400 are configured using, for example, a processor such as a CPU, a memory, and a communication interface. Each device of each of the optical transmission devices 20-1 to 20-4, the core node 30, the central station 40, the distributed station 50, the radio station 60, the base station controller 85, and the optical transmission device controller 90 functions as a communication device including a control unit when the processor executes a program.

The control unit provides each function for causing the communication device to function as the optical transmission devices 20-1 to 20-4, the core node 30, the central station 40, the distributed station 50, the radio station 60, the base station controller 85, or the optical transmission device controller 90. Note that all or some of the functions of the control unit may be implemented by using hardware such as an ASIC, a PLD, or an FPGA.

The aforementioned program may be recorded in a computer-readable recording medium. Examples of the computer-readable recording medium include a portable medium such as a flexible disk, a magneto-optical disc, ROM, a CD-ROM, and a semiconductor storage device (for example, a solid state drive (SSD)), and a storage device such as a hard disk and a semiconductor storage device built in a computer system. The aforementioned program may be transmitted via a telecommunication line.

Next, a specific configuration of each device will be described. The base station controller 85 includes an information analysis unit 86. The information analysis unit 86 acquires the identifier information acquired by the information acquisition unit 31 of the core node 30. The information analysis unit 86 determines whether or not generation of the dedicated optical path is necessary for each traffic flow on the basis of the acquired identifier information. In a case of determining that the dedicated optical path is necessary, the information analysis unit 86 transmits the optical path generation instruction to the optical transmission device controller 90. When transmitting the optical path generation instruction, the information analysis unit 86 notifies the optical transmission device controller 90 of an optical path identifier of the dedicated optical path.

The optical transmission device controller 90 includes a control determination unit 91. When the optical path generation instruction is received from the base station controller 85, the control determination unit 91 performs the optical path generation control of the dedicated optical path with respect to the optical transmission devices 20-1 to 20-4. When performing the optical path generation control, the control determination unit 91 notifies the optical transmission devices 20-1 to 20-4 of the optical path identifier of the dedicated optical path. Further, the control determination unit 91 notifies the optical transmission devices 20-1 to 20-4 of the optical path identifier of the dedicated optical path and also with respect to the device (for example, the server 10, the core node 30, the central station 40, the distributed station 50, and the radio station 60) connected to the optical transmission devices 20.

The device (for example, the server 10, the core node 30, the central station 40, the distributed station 50, and the radio station 60) connected to the optical transmission devices 20 determines to which of the basic optical path or the one or more dedicated optical paths the input optical signal is output according to the optical path identifier notification of which is provided from the optical transmission device controller 90.

In the signal transfer system 400 according to the thirteenth embodiment, the information acquisition unit 31 is included in a control unit of the core node 30, the information analysis unit 86 is included in a control unit of the base station controller 85, and the control determination unit 91 is included in a control unit of the optical transmission device controller 90.

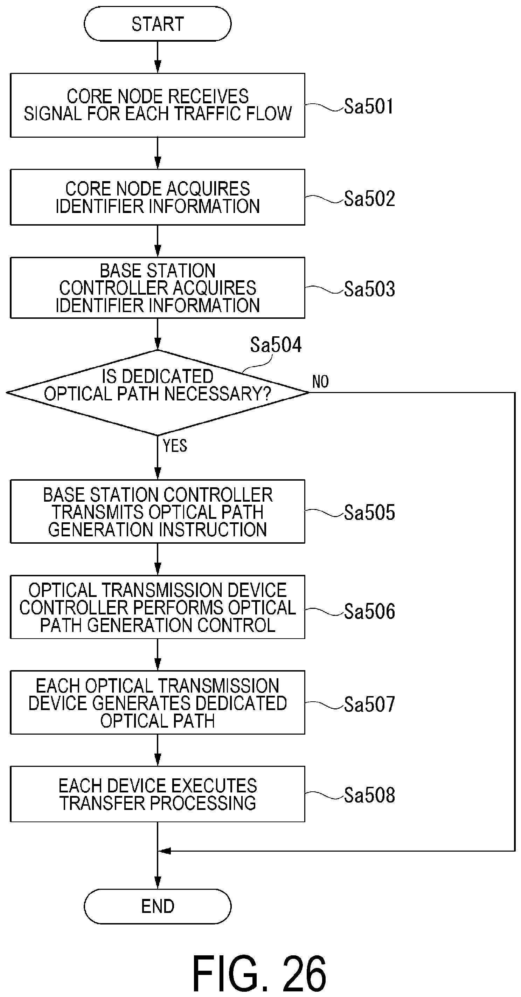

Fig. 26 is a flowchart illustrating an example of a flow of processing executed by the signal transfer system 400 according to the thirteenth embodiment. In the signal transfer system 400, the processing illustrated in Fig. 26 is repeatedly performed. Note that it is assumed that a basic optical path is generated in a wired section from the server 10 to the radio station 60 at the start of the processing in Fig. 26.

The core node 30 receives a signal for each traffic flow at the start of communication of the wireless terminal 80 (step Sa501). The information acquisition unit 31 included in the core node 30 acquires the identifier information for each traffic flow on the basis of the received signal (step Sa502). The information acquisition unit 31 transmits the acquired identifier information to the base station controller 85.

The information analysis unit 86 included in the base station controller 85 acquires the identifier information transmitted from the information acquisition unit 31 (step Sa503). The information analysis unit 86 determines whether or not a dedicated optical path is necessary on the basis of the acquired identifier information (step Sa504). If the information analysis unit 86 determines that a dedicated optical path is necessary (step Sa504-YES), the information analysis unit 86 transmits the optical path generation instruction to the optical transmission device controller 90 (step Sa505).

The control determination unit 91 included in the optical transmission device controller 90 acquires the optical path generation instruction transmitted from the base station controller 85. The control determination unit 91 performs the optical path generation control with respect to the optical transmission devices 20-1 to 20-4 on the basis of the acquired optical path generation instruction (step Sa506). At this time, the control determination unit 91 also notifies the device (for example, the server 10, the core node 30, the central station 40, the distributed station 50, and the radio station 60) connected to the optical transmission devices 20 of the optical path identifier.

The control units 21-1 to 21-4 of the optical transmission devices 20-1 to 20-4 generate the dedicated optical paths in predetermined sections according to the optical path generation control of the optical transmission device controller 90 (step Sa507). Thereafter, each device provided between the server 10 and the wireless terminal 80 performs input signal transfer processing (step Sa508). The transfer processing in step Sa508 is similar to step Sa107 according to the ninth embodiment except that each device provided between the server 10 and the wireless terminal 80 determines to which of the basic optical path or the one or more dedicated optical paths the optical signal is output on the basis of the optical path identifier notification of which is provided from the optical transmission device controller 90, and thus description thereof is omitted.

In the processing of step Sa504, if the information analysis unit 86 determines that a dedicated optical path is not necessary (step Sa504-NO), the information analysis unit 86 does not transmit the optical path generation instruction to the optical transmission device controller 90. Thereafter, the processing in Fig. 26 ends.

With the signal transfer system 400 configured as described above, the core node 30 notifies the base station controller 85 of the identifier information for each traffic flow determined between the wireless terminal 80 and the core node 30 at the start of communication of the wireless terminal 80. The base station controller 85 determines, based on the identifier information for each traffic flow, whether the dedicated optical path is necessary for each traffic flow, and instructs the optical transmission device controller 90 to generate a dedicated optical path in a case where a dedicated optical path is necessary. The optical transmission device controller 90 simultaneously instructs the optical transmission devices 20-1 to 20-4 to generate the dedicated optical path for the network section of each of the optical transmission devices 20-1 to 20-4 in response to the instruction from the base station controller 85. Each of the optical transmission devices 20 generates the instructed number of dedicated optical paths in response to the instruction from the optical transmission device controller 90, and transfers the traffic flow transmitted from the wireless terminal 80 to the server 10 via the generated dedicated optical paths.

With the above configuration, in the E2E communication of the wireless terminal 80 from the server 10, it is possible to eliminate the capacity shortage and the delay increase by generating the dedicated optical path for each traffic flow of the wireless terminal 80 as compared with the configuration in which a plurality of traffic flows is mixed with one optical path.

### (First Modification of Thirteenth Embodiment)

The signal transfer system 400 is not necessarily applied to a mobile communication system, and may be applied to a wireless communication system other than the mobile communication system. In this case, the signal transfer system 400 does not include, for example, the central station 40 or the distributed station 50, and it is sufficient if the radio station 60 is regarded as a Wi-Fi (registered trademark) access point and the core node 30 is regarded as a Wi-Fi controller.

### (Second Modification of Thirteenth Embodiment)

Either the central station 40 and the distributed station 50 or the distributed station 50 and the radio station 60 may be configured to be integrated into one device so that a section in which the optical transmission device is installed is reduced.

### (Third Modification of Thirteenth Embodiment)

The signal transfer system 400 may be configured such that the central station 40, not the core node 30, notifies the base station controller 85 of the identifier information. In such a configuration, the signal transfer system 400 includes a core node 30a and a central station 40a instead of the core node 30 and the central station 40 as in the tenth embodiment. Then, the base station controller 85 acquires the identifier information for each traffic flow from the information acquisition unit 41 of the central station 40a. The other processing is similar to that of the thirteenth embodiment, and thus description thereof is omitted.

### (Fourth Modification of Thirteenth Embodiment)

The signal transfer system 400 may be configured such that the distributed station 50, not the core node 30, notifies the base station controller 85 of the identifier information. In such a configuration, the signal transfer system 400 includes a core node 30b and a distributed station 50b instead of the core node 30 and the distributed station 50 as in the eleventh embodiment. Then, the base station controller 85 acquires the identifier information for each traffic flow from the information acquisition unit 51 of the distributed station 50b. The other processing is similar to that of the thirteenth embodiment, and thus description thereof is omitted.

### (Fifth Modification of Thirteenth Embodiment)

The signal transfer system 400 may be configured such that the radio station 60, not the core node 30, notifies the base station controller 85 of the identifier information. In such a configuration, the signal transfer system 400 includes a core node 30c and a radio station 60c instead of the core node 30 and the radio station 60 as in the twelfth embodiment. Then, the base station controller 85 acquires the identifier information for each traffic flow from the information acquisition unit 61 of the radio station 60c. The other processing is similar to that of the thirteenth embodiment, and thus description thereof is omitted.

### (First Modification Common to First to Thirteenth Embodiments)

In each of the above-described embodiments, the signal transfer system including the wireless terminal and the radio station and performs wireless communication has been described as an example, but, the signal transfer system according to each of the embodiments may be configured to include a terminal device and a terminal accommodation station and performs wired communication. The terminal device performs wired communication with the terminal accommodation station. The terminal device has one or more traffic flows similarly to the wireless terminal. The terminal accommodation station is a base station that accommodates the terminal device.

### (Second Modification Common to First to Thirteenth Embodiments)

In each of the above-described embodiments, the processing at the time of uplink communication has been described as an example. For example, the processing based on the traffic flow from the wireless terminal 80 to the server 10 that is the upper device has been described as an example. On the other hand, each of the above-described embodiments is also applicable to processing at the time of downlink communication. For example, each of the embodiments is similarly applicable to the processing based on the traffic flow from the server 10 that is the upper device to the wireless terminal 80. Specific processing is similar to that of each of the above-described embodiments except that a transmission source of the traffic flow is different.

Although the embodiments of the present invention have been described in detail with reference to the drawings, specific configurations are not limited to the embodiments and include design and the like within the scope of the present invention without departing from the gist of the present invention.

### Industrial Applicability

The present invention is applicable to a communication system that accommodates a wireless terminal, and a communication control method.

### Reference Signs List

- 10: Server
- 20, 20-1 to 20-4: Optical transmission device
- 21, 21-1 to 21-4: Control unit
- 30, 30a, 30b, 30c: Core node
- 31, 41, 51, 61: Information acquisition unit
- 40, 40a: Central station
- 50, 50b: Distributed station
- 60, 60c: Radio station
- 70: Orchestrator
- 71, 91: Control determination unit
- 80: Wireless terminal
- 85: Base station controller
- 86: Information analysis unit
- 90: Optical transmission device controller
- 100, 100a, 100b, 100c, 200, 200a, 200b, 200c, 300, 300a, 300b, 300c, 400: Signal transfer system

## Claims

1. A signal transfer system comprising:
a terminal accommodation station configured to accommodate one or more terminals;
one or more optical transmission devices configured to transfer signals exchanged between the one or more terminals and an upper device;
a core node configured to be provided between the one or more optical transmission devices and the upper device and determine priority for each traffic flow or identifier information regarding each traffic flow with respect to the one or more terminals;
the upper device configured to perform communication with the one or more terminals via the one or more optical transmission devices and the core node; and
a control device configured to control each device,
wherein
the signal transfer system comprises:
an information acquisition unit configured to acquire information of priority for each traffic flow or identifier information regarding each traffic flow for each traffic flow;
a control determination unit configured to perform optical path generation control of instructing each of the one or more optical transmission devices to generate a dedicated optical path for transferring a specific traffic flow among a plurality of traffic flows included in the one or more terminals based on the information of the priority or the identifier information acquired for each traffic flow; and
a control unit configured to generate the dedicated optical path according to the optical path generation control.

2. The signal transfer system according to claim 1, wherein
the control device includes the control determination unit,
the core node or the terminal accommodation station includes the information acquisition unit, and
the information acquisition unit provides notification of the acquired information of the priority or the acquired identifier information for each traffic flow.

3. The signal transfer system according to claim 1, further comprising:
a distributed station and a central station that relay the signals exchanged between the one or more terminals and the upper device between the terminal accommodation station and the core node,
wherein
the control device includes the control determination unit,
the distributed station or the central station includes the information acquisition unit, and
the information acquisition unit notifies the control device of the acquired information of the priority or the acquired identifier information for each traffic flow.

4. The signal transfer system according to any one of claims 1 to 3, further comprising:
an information analysis unit configured to determine whether the dedicated optical path is necessary based on the information of the priority or the identifier information acquired for each traffic flow,
wherein
the control determination unit performs optical path generation control of instructing each of the one or more optical transmission devices to generate the dedicated optical path when the information analysis unit determines that the dedicated optical path is necessary.

5. The signal transfer system according to any one of claims 1 to 3, wherein
the one or more optical transmission devices are a plurality of optical transmission devices, and
the control determination unit performs the optical path generation control at a same timing with respect to each of the plurality of optical transmission devices.

6. The signal transfer system according to any one of claims 1 to 3, wherein
the control determination unit instructs each of the one or more optical transmission devices to generate the dedicated optical path when it is determined that the dedicated optical path is necessary.

7. The signal transfer system according to any one of claims 1 to 3, wherein
the identifier information is an identifier of a traffic flow, and
the control determination unit performs optical path generation control of instructing each of the one or more optical transmission devices to generate the dedicated optical path for each traffic flow based on the identifier of the traffic flow.

8. The signal transfer system according to any one of claims 1 to 3, wherein
the identifier information is identifiers of the one or more terminals, and
the control determination unit performs optical path generation control of instructing each of the one or more optical transmission devices to generate the dedicated optical path for each terminal based on the identifiers of the one or more terminals.

9. The signal transfer system according to any one of claims 1 to 3, wherein
the identifier information is a slice ID set for each PDU Session ID, and
the control determination unit performs optical path generation control of instructing each of the one or more optical transmission devices to generate the dedicated optical path for each slice ID based on the slice ID.

10. An optical transmission device comprising:
a control unit configured to generate a dedicated optical path for transferring a specific traffic flow among a plurality of traffic flows included in one or more terminals based on information of priority or identifier information regarding each traffic flow acquired for each traffic flow exchanged between the one or more terminals and an upper device.

11. A control device in a signal transfer system, the signal transfer system including:
a terminal accommodation station configured to accommodate one or more terminals, one or more optical transmission devices that transfer signals exchanged between the one or more terminals and an upper device, a core node that is provided between the one or more optical transmission devices and the upper device and determines priority for each traffic flow or identifier information regarding each traffic flow with respect to the one or more terminals, the upper device that performs communication with the one or more terminals via the one or more optical transmission devices and the core node, and the control device that controls each device,
wherein
the control device comprises:
a control determination unit configured to perform optical path generation control of instructing each of the one or more optical transmission devices to generate a dedicated optical path for transferring a specific traffic flow among a plurality of traffic flows included in the one or more terminals based on information of the priority or the identifier information acquired for each traffic flow.

12. A signal transfer method in a signal transfer system, the signal transfer system including: a terminal accommodation station configured to accommodate one or more terminals, one or more optical transmission devices configured to transfer signals exchanged between the one or more terminals and an upper device, a core node configured to be provided between the one or more optical transmission devices and the upper device and determines priority for each traffic flow or identifier information regarding each traffic flow with respect to the one or more terminals, the upper device that performs communication with the one or more terminals via the one or more optical transmission devices and the core node, and a control device that controls each device,
wherein
the signal transfer method comprises:
acquiring information of priority for each traffic flow or identifier information regarding each traffic flow for each traffic flow;
performing optical path generation control of instructing each of the one or more optical transmission devices to generate a dedicated optical path for transferring a specific traffic flow among a plurality of traffic flows included in the one or more terminals based on the information of the priority or the identifier information acquired for each traffic flow; and
generating the dedicated optical path according to the optical path generation control.
